# EUROPEAN PATENT APPLICATION

(11) **EP 2 838 249 A1**
(43) Date of publication of application: **18.02.2015**
(21) Application number: 13879244.5
(22) Date of filing: 04.07.2013
(51) Int. Cl.: H04M 3/523, H04M 3/42, H04L 12/58

(54) **METHOD, APPARATUS AND SYSTEM FOR VOICE CALL PROCESSING**

(71) Applicant: Huawei Technologies Co., Ltd., Shenzhen, Guangdong 518129 (CN)
(72) Inventor: GAO, Zhuo, Shenzhen, Guangdong 518129 (CN); TONG, Chunrong, Shenzhen, Guangdong 518129 (CN); HUANG, Yemao, Shenzhen, Guangdong 518129 (CN)
(74) Representative: Maiwald Patentanwalts GmbH
(86) International application number: PCT/CN2013/078814
(87) International publication number: WO 2015/000161

(57) **Abstract**

Embodiments of the present invention relate to a method, an apparatus and a system for processing a voice call. The method includes: when a service control entity in a call center determines that a user corresponding to a user terminal needs assistance at a certain node in a self-service process, establishing, by the service control entity, a voice site, where the self-service process is specifically provided by a self-service process entity in the call center; and adding, by the service control entity, the user terminal, the self-service process entity, and an agent terminal in the call center to the voice site, so that the agent terminal provides an assistance service for the user according to a demand of the user at the certain node.

## Description

### TECHNICAL FIELD

The present invention relates to the field of communications technologies, and in particular, to a method, an apparatus and a system for processing a voice call.

### BACKGROUND

A call center is a system for implementing centralized user services by means of modem communications technologies. Most call centers use a computer and telephony integration (Computer and Telephony Integrator, CTI for short) technology, where the CTI technology integrates multiple communications media such as phone, fax, e-mail, and Voice over Internet Protocol (Voice over Internet Protocol, VoIP for short), and become a platform for achieving various objectives such as customer services, sales, and marketing.

At present, call centers are experiencing a gradually deepening transition from traditional manual service into self-service with personalized and abundant services. A self-service process provides a precondition for manual service and alleviates pressure of manual service. When a terminal of a user initiates a voice call to a call center, a general solution is as follows: The terminal initiates a voice call, the voice call proceeds to a self-service process provided by a self-service process entity, the self-service process responds to the voice call, and the user correctly performs self-service operations as instructed in the self-service process and rapidly obtains a result. However, if the user requests manual service when encountering a problem, the user needs to return to a main menu and select manual service so as to communicate with a certain manual agent, and then finishes relevant service operations with the help of the manual agent.

Therefore, the solution in the prior art also reveals the following defects: 1) The self-service process needs to be used by customers of different levels. When using the self-service process for the first time, a new customer group faced with abundant and multi-level menu options cannot correctly select a desired service or rapidly access a corresponding service entry, but needs to resort to a manual agent in time. However, in the prior art, the manual agent service cannot be provided online for the user at a certain node in the self-service process, and as a result, the user wastes a lot of time in the self-service process, which reduces the service efficiency of the call center and degrades user

### SUMMARY

Embodiments of the present invention provide a method, an apparatus and a system for processing a voice call, which solve a problem in the prior art that the service efficiency of a call center is low because a manual agent service cannot be provided online for a user at a certain node in a self-service process.

According to a first aspect, an embodiment of the present invention provides a method for processing a voice call, where the method includes:
when a service control entity in a call center determines that a user corresponding to a user terminal needs assistance at a certain node in a self-service process, establishing, by the service control entity, a voice site, where the self-service process is specifically provided by a self-service process entity in the call center; and
adding, by the service control entity, the user terminal, the self-service process entity, and an agent terminal in the call center to the voice site, so that the agent terminal provides an assistance service for the user according to a demand of the user at the certain node.

In a first possible implementation manner, the determining, by a service control entity in a call center, that a user corresponding to a user terminal needs assistance at a certain node in a self-service process specifically includes:
receiving, by the service control entity, an assistance message that is sent by the self-service process entity when the self-service process entity receives a help-seeking instruction, where the help-seeking instruction is sent by the user terminal at the certain node in the self-service process; and
determining, by the service control entity according to the assistance message, that the user corresponding to the user terminal needs an assistance service at the certain node in the self-service process.

With reference to the first aspect or the first possible implementation manner of the first aspect, in a second possible implementation manner, the assistance message includes node identity information of the certain node;
before the establishing, by the service control entity, a voice site, the method further includes:
   sending, by the service control entity, an allocate request message to an agent management entity in the call center, so as to request the agent management entity to allocate the agent terminal, where the allocate request message includes the node identity information and is used by the agent management entity to send the node identity information to the allocated agent terminal ; and
   receiving, by the service control entity, an allocate response message sent by the agent management entity, where the allocate response message includes identity information of the allocated agent terminal ; and
   the adding, by the service control entity, the user terminal, the self-service process entity, and an agent terminal in the call center to the voice site, so that the agent terminal provides an assistance service for the user according to a demand of the user at the certain node specifically includes:
      adding, by the service control entity, the user terminal, the self-service process entity, and the agent terminal identified by the identity information to the voice site, so that the agent terminal determines, according to the node identity information, that the user corresponding to the user terminal is at the certain node in the self-service process, and then the agent terminal provides the assistance service for the user according to the demand of the user at the certain node.

In a third possible implementation manner, the determining, by a service control entity in a call center, that a user corresponding to a user terminal needs assistance at a certain node in a self-service process specifically includes:
receiving, by the service control entity, a query message sent by the agent terminal that monitors a state of the self-service process, where the query message is sent by the agent terminal when the agent terminal determines that an exception occurs in an operation performed by the user corresponding to the user terminal at the certain node;
sending, by the service control entity, the query message to the user terminal by using the self-service process entity, where the query message is used to inquire of the user whether to accept the assistance service provided by the agent terminal;
when the user accepts the assistance service provided by the agent terminal, receiving, by the service control entity, a permit message that is sent by the user terminal by using the self-service process entity; and
determining, by the service control entity according to the permit message, that the user corresponding to the user terminal needs an assistance service at the certain node in the self-service process.

With reference to the first aspect, or the first, the second, or the third possible implementation manner of the first aspect, in a fourth possible implementation manner, the method further includes:
receiving, by the service control entity, a jump request message sent by the agent terminal, and forwarding the jump request message to the self-service process entity, where the jump request message includes target node identity information, which is used to instruct the self-service process entity to cause a node where the user is to jump to a target node identified by the target node identity information.

With reference to the first aspect or the fourth possible implementation manner of the first aspect, in a fifth possible implementation manner, the method further includes:
receiving, by the service control entity, a jump success response message sent by the self-service process entity, and forwarding the jump success response message to the agent terminal, so that the agent terminal marks, according to the jump success response message and in a self-service flowchart displayed on the agent terminal, the target node as a node where the user is currently at, where the self-service flowchart shows all nodes in the self-service process and a relationship among all the nodes in the self-service process.

With reference to the first aspect or the fifth possible implementation manner of the first aspect, in a sixth possible implementation manner, the receiving, by the service control entity, a jump success response message sent by the self-service process entity further includes:
sending, by the service control entity, a notification message to the agent management entity, where the notification message includes the target node identity information and is used by the agent management entity to determine, according to the target node identity information, a node where the user assisted by the agent terminal is currently at.

According to a second aspect, an embodiment of the present invention provides a method for processing a voice call, where the method includes:
receiving, by an agent management entity in a call center, an allocate request message that is sent by a service control entity in the call center when the service control entity determines that a user corresponding to a user terminal needs assistance at a certain node in a self-service process, where the allocate request message includes node identity information of the certain node;
allocating, by the agent management entity according to the allocate request message, an agent terminal capable of providing an assistance service for the user from an agent queue managed by the agent management entity;
sending, by the agent management entity, the node identity information to the allocated agent terminal ; and
sending, by the agent management entity, an allocate response message to the service control entity, where the allocate response message includes identity information of the allocated agent terminal and is used by the service control entity to add the user terminal, the self-service process entity, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

In a first possible implementation manner, the allocating, by the agent management entity according to the allocate request message, an agent terminal capable of providing an assistance service for the user from an agent queue managed by the agent management entity specifically includes:
acquiring, according to the allocate request message, user information corresponding to the user terminal, determining a priority of the user by using the user information, and allocating, by the agent management entity according to the priority of the user from the agent queue, an agent terminal capable of providing an assistance service for the user from the agent queue managed by the agent management entity; or
in a case in which the allocate request message further includes node type information, allocating, by the agent management entity according to the node type information, an agent terminal capable of providing an assistance service for the user from the agent queue managed by the agent management entity.

In a second possible implementation manner, after the allocating, by the agent management entity according to the allocate request message, an agent terminal capable of providing an assistance service for the user from an agent queue managed by the agent management entity, the method further includes:
setting, by the agent management entity, a state of the allocated agent terminal to a transparent agent state, and canceling the transparent agent state when the agent terminal stops providing the assistance service for the user, so as to collect statistics on a situation in which the agent terminal serves as a transparent agent to provide an assistance service for a user.

In a third possible implementation manner, after the sending, by the agent management entity, an allocate response message to the service control entity, the method further includes:
when the agent terminal jumps from the certain node to another node in the self-service process entity, receiving, by the agent management entity, a notification message sent by the service control entity, where the notification message includes an identity of the another node; and determining, according to the identity of the another node, that the user assisted by the agent terminal is currently at the another node.

According to a third aspect, an embodiment of the present invention provides a method for processing a voice call, where the method includes:
receiving, by an agent terminal in a call center, a call request that is sent by a service control entity in the call center when the service control entity determines that a user corresponding to a user terminal needs assistance at a certain node in a self-service process for inviting the agent terminal to join in a voice site established by the service control entity, where the self-service process is specifically provided by a self-service process entity in the call center; and
when the service control entity adds the user terminal, the self-service process entity, and the agent terminal to the voice site, providing, by the agent terminal, an assistance service for the user according to a demand of the user at the certain node.

In a first possible implementation manner, before the receiving, by an agent terminal in a call center, the call request that is sent by the service control entity when the service control entity determines that a user corresponding to a user terminal needs an assistance service at a certain node in a self-service process, the method further includes:
when the agent terminal determines that an exception occurs on the user corresponding to the user terminal at the certain node, sending, by the agent terminal, a query message to the user terminal by using the service control entity, where the query message is used to inquire of the user whether to accept the assistance service provided by the agent terminal; and
the receiving, by an agent terminal, a call request that is sent by the service control entity when the service control entity determines that a user corresponding to a user terminal needs an assistance service at a certain node in a self-service process for inviting the agent terminal to join in a voice site established by the service control entity specifically includes:
   receiving, by the agent terminal, the call request that is sent by the service control entity when the service control entity receives a permit message sent by the user terminal and
   determines, according to the permit message, that the user corresponding to the user terminal needs an assistance service at the certain node in the self-service process.

In a second possible implementation manner, before the receiving, by an agent terminal in a call center, the call request that is sent by a service control entity in the call center when the service control entity determines that a user corresponding to a user terminal needs an assistance service at a certain node in a self-service process, the method further includes:
receiving, by the agent terminal, node identity information, sent by an agent management entity in the call center, of the certain node where the user corresponding to the user terminal is in the self-service process, so that the agent terminal determines,
according to the node identity information, that the user corresponding to the user terminal is at the certain node in the self-service process.

With reference to the third aspect or the first or the second possible implementation manner of the third aspect, in a third possible implementation manner, the method further includes:
sending, by the agent terminal, a jump request message to the self-service process entity by using the service control entity, where the jump request message includes target node identity information and is used to instruct the self-service process entity to cause a node where the user is to jump to a target node identified by the target node identity information.

With reference to the third aspect or the third possible implementation manner of the third aspect, in a fourth possible implementation manner, the method further includes: receiving, by the agent terminal, a jump success response message that is forwarded by the service control entity and sent by the self-service process entity; and
marking, by the agent terminal, according to the jump success response message and on a self-service flowchart displayed on the agent terminal, the target node as a node where the user is currently at, where the self-service flowchart shows all nodes in the self-service process and a relationship among all the nodes in the self-service process.

With reference to the third aspect, or the first, the second, the third, or the fourth possible implementation manner of the third aspect, in a fifth possible implementation manner, the method further includes:
when the target node is a serving device, stopping, by the agent terminal, providing the corresponding assistance service for the user.

According to a fourth aspect, an embodiment of the present invention provides an apparatus for processing a voice call, where the apparatus includes:
an establishing unit, configured to: when it is determined that a user corresponding to a user terminal needs assistance at a certain node in a self-service process, establish a voice site, where the self-service process is specifically provided by a self-service process entity in a call center; and
an adding unit, configured to add the user terminal, the self-service process entity, and an agent terminal in the call center to the voice site, so that the agent terminal provides an assistance service for the user according to a demand of the user at the certain node.

In a first possible implementation manner, the apparatus further includes: a receiving unit, configured to receive an assistance message that is sent by the self-service process entity when the self-service process entity receives a help-seeking instruction, where the help-seeking instruction is sent by the user terminal at the certain node in the self-service process; and configured to transmit the assistance message to a determining unit; and
the determining unit, configured to receive the assistance message from the receiving unit, and determine, according to the assistance message, that the user corresponding to the user terminal needs an assistance service at the certain node in the self-service process.

With reference to the fourth aspect or the first possible implementation manner of the fourth aspect, in a second possible implementation manner, the assistance message received by the receiving unit includes node identity information of the certain node;
the apparatus further includes a sending unit, configured to send an allocate request message to an agent management entity in the call center, so as to request the agent management entity to allocate the agent terminal, where the allocate request message includes the node identity information and is used by the agent management entity to send the node identity information to the allocated agent terminal;
the receiving unit is further configured to receive an allocate response message sent by the agent management entity, where the allocate response message includes identity information of the allocated agent terminal ; and configured to transmit the identity information of the agent terminal to the adding unit; and
the adding unit is specifically configured to receive the identity information of the agent terminal from the receiving unit, and add the user terminal, the self-service process entity, and the agent terminal identified by the identity information to the voice site, so that the agent terminal determines, according to the node identity information, that the user corresponding to the user terminal is at the certain node in the self-service process, and then the agent terminal provides an assistance service for the user according to a demand of the user at the certain node.

In a third possible implementation manner, the apparatus further includes: a receiving unit, configured to receive a query message sent by the agent terminal that monitors a state of the self-service process, where the query message is sent by the agent terminal when the agent terminal determines that an exception occurs in an operation performed by the user corresponding to the user terminal at the certain node; and configured to transmit the query message to the sending unit; and
the sending unit, configured to receive the query message from the receiving unit, and send the query message to the user terminal by using the self-service process entity, where the query message is used to inquire of the user whether to accept the assistance service provided by the agent terminal;
the receiving unit is further configured to: when the user accepts the assistance service provided by the agent terminal, receive a permit message that is sent by the user terminal by using the self-service process entity, and configured to transmit the permit message to the determining unit; and
the determining unit is further configured to receive the permit message from the receiving unit, and determine, according to the permit message, that the user corresponding to the user terminal needs an assistance service at the certain node in the self-service process.

With reference to the fourth aspect or the second or the third possible implementation manner of the fourth aspect, in a fourth possible implementation manner, the receiving unit is further configured to receive a jump request message sent by the agent terminal, and configured to transmit the jump request message to the sending unit; and
the sending unit is further configured to receive the jump request message from the receiving unit, and forward the jump request message to the self-service process entity, where the jump request message includes target node identity information and is used to instruct the self-service process entity to cause a node where the user is to jump to a target node identified by the target node identity information.

With reference to the fourth aspect or the fourth possible implementation manner of the fourth aspect, in a fifth possible implementation manner, the receiving unit is further configured to receive a jump success response message sent by the self-service process entity, and configured to transmit the jump success response message to the sending unit; and
the sending unit is further configured to receive the jump success response message from the receiving unit, and forward the jump success response message to the agent terminal, so that the agent terminal marks, according to the jump success response message and on a self-service flowchart displayed on the agent terminal, the target node as a node where the user is currently at, where the self-service flowchart shows all nodes in the self-service process and a relationship among all the nodes in the self-service process.

With reference to the fourth aspect or the fifth possible implementation manner of the fourth aspect, in a sixth possible implementation manner, the sending unit is further configured to send a notification message to the agent management entity, where the notification message includes the target node identity information and is used by the agent management entity to determine, according to the target node identity information, a node where the user assisted by the agent terminal is currently at.

According to a fifth aspect, an embodiment of the present invention provides an apparatus for processing a voice call, where the apparatus includes:
a receiving unit, configured to receive an allocate request message that is sent by a service control entity in a call center when the service control entity determines that a user corresponding to a user terminal needs assistance at a certain node in a self-service process, where the allocate request message includes node identity information of the certain node; and configured to transmit the allocate request message to an allocating unit and transmit the node identity information to a sending unit;
the allocating unit, configured to receive the allocate request message from the receiving unit, and allocate, according to the allocate request message, an agent terminal capable of providing an assistance service for the user from an agent queue managed by the apparatus; and
the sending unit, configured to receive the node identity information from the receiving unit, and send the node identity information to the allocated agent terminal; where the sending unit is further configured to send an allocate response message to the service control entity, where the allocate response message includes identity information of the allocated agent terminal and is used by the service control entity to add the user terminal, the self-service process, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

In a first possible implementation manner, the allocating unit is specifically configured to acquire, according to the allocate request message, user information corresponding to the user terminal, determine a priority of the user by using the user information, and allocate, according to the priority of the user, the agent terminal capable of providing the assistance service for the user from the agent queue managed by the apparatus; or
in a case in which the allocate request message received by the receiving unit further includes node type information,
the allocating unit is specifically configured to allocate, according to the node type information, the agent terminal capable of providing the assistance service for the user from the agent queue managed by the apparatus.

In a second possible implementation manner, the apparatus further includes a setting unit, configured to set a state of the allocated agent terminal to a transparent agent state, and cancel the transparent agent state when the agent terminal stops providing the assistance service for the user, so as to collect statistics on a situation in which the agent terminal serves as a transparent agent to provide an assistance service for a user.

In a third possible implementation manner, the receiving unit is further configured to: when the agent terminal jumps from the certain node to another node in the self-service process entity, receive a notification message sent by the service control entity, where the notification message includes an identity of the another node; and determine, according to the identity of the another node, that the user assisted by the agent terminal is currently at the another node.

According to a sixth aspect, an embodiment of the present invention provides an apparatus for processing a voice call, where the apparatus includes:
a receiving unit, configured to receive a call request that is sent by the service control entity in a call center when the service control entity determines that a user corresponding to a user terminal needs assistance at a certain node in a self-service process for inviting the apparatus to join in a voice site established by the service control entity, where the self-service process is specifically provided by a self-service process entity in the call center; and
a serving unit, configured to: when the service control entity adds the user terminal, the self-service process entity, and the apparatus to the voice site, provide an assistance service for the user according to a demand of the user at the certain node.

In a first possible implementation manner, the apparatus further includes a sending unit, configured to: when it is determined that an exception occurs on the user corresponding to the user terminal at the certain node, send a query message to the user terminal by using the service control entity, where the query message is used to inquire of the user whether to accept the assistance service provided by the apparatus; and
the receiving unit is specifically configured to receive the call request that is sent by the service control entity when the service control entity receives a permit message sent by the user terminal and determines, according to the permit message, that the user corresponding to the user terminal needs assistance at the certain node in the self-service process.

In a second possible implementation manner, the receiving unit is further configured to receive node identity information, sent by an agent management entity in the call center, of the certain node where the user corresponding to the user terminal is in the self-service process, and configured to determine, according to the node identity information, that the user corresponding to the user terminal is at the certain node in the self-service process.

With reference to the sixth aspect or the first or the second possible implementation manner of the sixth aspect, in a third possible implementation manner, the apparatus further includes: a jumping unit, configured to instruct, by using the service control entity, the self-service process entity to cause a node where the user is to jump to a target node identified by target node identity information.

With reference to the sixth aspect or the third possible implementation manner of the sixth aspect, in a fourth possible implementation manner, the receiving unit is further configured to receive a jump success response message that is forwarded by the service control entity and sent by the self-service process entity, and configured to transmit the jump success response message to the jumping unit; and
the jumping unit is further configured to receive the jump success response message from the receiving unit, jump to the target node according to the jump success response message, and mark, on a self-service flowchart displayed on the apparatus, the target node as a node where the user is currently at, where the self-service flowchart shows all nodes in the self-service process and a relationship among all the nodes in the self-service process. With reference to the sixth aspect or the third possible implementation manner of the sixth aspect, in a fourth possible implementation manner, the apparatus further includes a stopping unit, configured to: when the target node is a serving device, stop providing the corresponding assistance service for the user. With reference to the sixth aspect, or the first, the second, the third, or the fourth possible implementation manner of the sixth aspect, the apparatus further includes:
a stopping unit, configured to: when the target node is a serving device, stop providing the corresponding assistance service for the user.

According to a seventh aspect, an embodiment of the present invention provides an apparatus for processing a voice call, where the apparatus includes:
a network interface;
a processor; and
a memory; where
the network interface is configured to communicate with a user terminal, a self-service process entity, an agent management entity, and an agent terminal; and the memory is configured to store an application program, where the application program includes an instruction which can be used to cause the processor to execute the following procedure:
   when it is determined that a user corresponding to a user terminal needs assistance at a certain node in a self-service process, establishing a voice site, where the self-service process is specifically provided by a self-service process entity in a call center; and
   adding the user terminal, the self-service process entity, and an agent terminal in the call center to the voice site, so that the agent terminal provides an assistance service for the user according to a demand of the user at the certain node.

In a first possible implementation manner, the instruction, which can be used to cause the processor to execute the procedure of determining that a user corresponding to a user terminal needs assistance at a certain node in a self-service process, of the application program is specifically an instruction for executing the following procedure:
receiving an assistance message that is sent by the self-service process entity when the self-service process entity receives a help-seeking instruction, where the help-seeking instruction is sent by the user terminal at the certain node in the self-service process; and
determining, according to the assistance message, that the user corresponding to the user terminal needs an assistance service at the certain node in the self-service process.

With reference to the seventh aspect or the first possible implementation manner of the seventh aspect, in a second possible implementation manner, the received assistance message includes node identity information of the certain node, and the application program further includes an instruction which can be used to cause the processor to execute the following procedure:
sending an allocate request message to an agent management entity in the call center, so as to request the agent management entity to allocate the agent terminal, where the allocate request message includes the node identity information and is used by the agent management entity to send the node identity information to the allocated agent terminal;
and
receiving an allocate response message sent by the agent management entity, where the allocate response message includes identity information of the allocated agent terminal ;
and
the instruction, which can be used to cause the processor to execute the procedure of adding the user terminal, the self-service process entity, and an agent terminal in the call center to the voice site, so that the agent terminal provides an assistance service for the user according to a demand of the user at the certain node, of the application program is specifically an instruction for executing the following procedure:
   adding the user terminal, the self-service process entity, and the agent terminal identified by the identity information to the voice site, so that the agent terminal determines, according to the node identity information, that the user corresponding to the user terminal is at the certain node in the self-service process, and then the agent terminal provides the assistance service for the user according to the demand of the user at the certain node.

In a third possible implementation manner, the instruction, which can be used to cause the processor to execute the procedure of determining that a user corresponding to a user terminal needs assistance at a certain node in a self-service process, of the application program is specifically an instruction for executing the following procedure:
receiving a query message sent by the agent terminal that monitors a state of the self-service process, where the query message is sent by the agent terminal when the agent terminal determines that an exception occurs in an operation performed by the user corresponding to the user terminal at the certain node;
sending the query message to the user terminal by using the self-service process entity, where the query message is used to inquire of the user whether to accept the assistance service provided by the agent terminal;
when the user accepts the assistance service provided by the agent terminal, receiving a permit message that is sent by the user terminal by using the self-service process entity; and
determining, according to the permit message, that the user corresponding to the user terminal needs an assistance service at the certain node in the self-service process.

With reference to the seventh aspect, or the first, the second, or the third possible implementation manner of the seventh aspect, in a fourth possible implementation manner, the application program further includes an instruction which can be used to cause the processor to execute the following procedure:
receiving a jump request message sent by the agent terminal, and forwarding the jump request message to the self-service process entity, where the jump request message includes target node identity information and is used to instruct the self-service process entity to cause a node where the user is to jump to a target node identified by the target node identity information.

With reference to the seventh aspect or the fourth possible implementation manner of the seventh aspect, in a fifth possible implementation manner, the application program further includes an instruction which can be used to cause the processor to execute the following procedure:
receiving a jump success response message sent by the self-service process entity, and forwarding the jump success response message to the agent terminal, so that the agent terminal marks, according to the jump success response message and on a self-service flowchart displayed on the agent terminal, the target node as a node where the user is currently at, where the self-service flowchart shows all nodes in the self-service process and a relationship among all the nodes in the self-service process.

With reference to the seventh aspect or the fifth possible implementation manner of the seventh aspect, in a sixth possible implementation manner, the application program further includes an instruction which can be used to cause the processor to execute the following procedure:
sending a notification message to the agent management entity, where the notification message includes the target node identity information and is used by the agent management entity to determine, according to the target node identity information, a node where the user assisted by the agent terminal is currently at.

According to an eighth aspect, an embodiment of the present invention provides an apparatus for processing a voice call, where the apparatus includes:
a network interface;
a processor; and
a memory; where
the network interface is configured to communicate with a self-service process entity, a service control entity, and an agent terminal; and
the memory is configured to store an application program, where the application program includes an instruction which can be used to cause the processor to execute the following procedure:
   receiving an allocate request message that is sent by a service control entity in a call center when the service control entity determines that a user corresponding to a user terminal needs assistance at a certain node in a self-service process, where the allocate request message includes node identity information of the certain node;
   allocating, according to the allocate request message, an agent terminal capable of providing an assistance service for the user from an agent queue managed by the agent management entity;
   sending the node identity information to the allocated agent terminal ; and sending an allocate response message to the service control entity, where the allocate response message includes identity information of the allocated agent terminal and is used by the service control entity to add the user terminal, the self-service process entity, and the agent terminal identified by the identity information to a voice site, so that the
   agent terminal determines, according to the node identity information, that the user corresponding to the user terminal is at the certain node in the self-service process, and then the agent terminal provides the assistance service for the user according to a demand of the user at the certain node.

In a first possible implementation manner, the instruction, which can be used to cause the processor to execute the procedure of allocating, according to the allocate request message, an agent terminal capable of providing an assistance service for the user from an agent queue managed by the agent management entity, of the application program is specifically an instruction for executing the following procedure:
acquiring, according to the allocate request message, user information corresponding to the user terminal, determining a priority of the user by using the user information, and allocating, according to the priority of the user, an agent terminal capable of providing an assistance service for the user from the agent queue managed by the agent management entity; or
in a case in which the received allocate request message further includes node type information, allocating, according to the node type information, an agent terminal capable of providing an assistance service for the user from the agent queue managed by the agent management entity.

In a second possible implementation manner, the application program further includes an instruction which can be used to cause the processor to execute the following procedure:
setting a state of the allocated agent terminal to a transparent agent state, and canceling the transparent agent state when the agent terminal stops providing the assistance service for the user, so as to collect statistics on a situation in which the agent terminal serves as
a transparent agent to provide an assistance service for a user.

In a third possible implementation manner, the application program further includes an instruction which can be used to cause the processor to execute the following procedure:
when the agent terminal jumps from the certain node to another node in the self-service process entity, receiving a notification message sent by the service control entity, where the notification message includes an identity of the another node; and determining,
according to the identity of the another node, that the user assisted by the agent terminal is currently at the another node.

According to a ninth aspect, an embodiment of the present invention provides an apparatus for processing a voice call, where the apparatus includes:
a network interface;
a processor; and
a memory; where
the network interface is configured to communicate with a user terminal, a self-service process entity, a service control entity, and an agent management entity; and
the memory is configured to store an application program, where the application program includes an instruction which can be used to cause the processor to execute the following procedure:
   receiving a call request that is sent by a service control entity in a call center when the service control entity determines that a user corresponding to a user terminal needs assistance at a certain node in a self-service process for inviting the agent terminal to join in a voice site established by the service control entity, where the self-service process is specifically provided by a self-service process entity in the call center; and
   when the service control entity adds the user terminal, the self-service process entity, and the apparatus to the voice site, providing an assistance service for the user according to a demand of the user at the certain node.

In a first possible implementation manner, the application program further includes an instruction which can be used to cause the processor to execute the following procedure:
when it is determined that an exception occurs on the user corresponding to the user terminal at the certain node, sending a query message to the user terminal by using the service control entity, where the query message is used to inquire of the user whether to accept the assistance service provided by the apparatus; and
the instruction, which can be used to cause the processor to execute the procedure of receiving a call request that is sent by the service control entity when the service control entity determines that a user corresponding to a user terminal needs an assistance service at a certain node in a self-service process for inviting the agent terminal to join in a voice site established by the service control entity, of the application program is specifically an instruction for executing the following procedure:
   receiving the call request that is sent by the service control entity when the service control entity receives a permit message sent by the user terminal and determines,
   according to the permit message, that the user corresponding to the user terminal needs assistance at the certain node in the self-service process.

In a second possible implementation manner, the application program further includes an instruction which can be used to cause the processor to execute the following procedure:
receiving node identity information, sent by an agent management entity in the call center, of the certain node where the user corresponding to the user terminal is in the self-service process, so that the apparatus determines, according to the node identity information, that the user corresponding to the user terminal is at the certain node in the self-service process.

With reference to the ninth aspect or the first or the second possible implementation manner of the ninth aspect, in a third possible implementation manner, the application program further includes an instruction which can be used to cause the processor to execute the following procedure:
sending a jump request message to the self-service process entity by using the service control entity, where the jump request message includes target node identity information and is used to instruct the self-service process entity to cause a node where the user is to jump to a target node identified by the target node identity information.

With reference to the ninth aspect or the third possible implementation manner of the ninth aspect, in a fourth possible implementation manner, the application program further includes an instruction which can be used to cause the processor to execute the following procedure:
receiving a jump success response message that is forwarded by the service control entity and sent by the self-service process entity; and
marking, according to the jump result message and on a self-service flowchart displayed on the agent terminal, the target node as a node where the user is currently at, where the self-service flowchart shows all nodes in the self-service process and a relationship among all the nodes in the self-service process.

With reference to the ninth aspect, or the first, the second, the third, or the fourth possible implementation manner of the ninth aspect, in a fifth possible implementation manner, the application program further includes an instruction which can be used to cause the processor to execute the following procedure:
when the target node is a serving device, stopping providing the corresponding assistance service for the user.

According to a tenth aspect, an embodiment of the present invention provides a system for processing a voice call, where the system includes: the apparatuses for processing a voice call that are provided according to the fourth aspect and the sixth aspect of the present invention; or
the apparatuses for processing a voice call that are provided according to the seventh aspect and the ninth aspect of the present invention.

In a first possible implementation manner, the system further includes: the apparatus for processing a voice call that is provided according to the fifth aspect of the present invention; or
the apparatus for processing a voice call that is provided according to the eighth aspect of the present invention.

With reference to the tenth aspect or the first possible implementation manner of the tenth aspect, in a second possible implementation manner, the system further includes a self-service process entity.

Therefore, by using the method, apparatus and system for processing a voice call that are provided in the embodiments of the present invention, when a service control entity in a call center determines that a user corresponding to a user terminal needs assistance at a certain node in a self-service process, the service control entity establishes a voice site, and adds the user terminal, a self-service process entity, and an agent terminal in the call center to the voice site, so that the agent terminal provides an assistance service for the user according to a demand of the user at the certain node. With the technical features that the service control entity establishes a voice site and adds the user terminal, the self-service process entity, and the agent terminal to the voice site, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### BRIEF DESCRIPTION OF DRAWINGS

FIG. 1 is a flowchart of a method for processing a voice call according to Embodiment 1 of the present invention;
FIG. 2 is a flowchart of a method for processing a voice call according to Embodiment 2 of the present invention;
FIG. 3 is a schematic diagram showing a life cycle of an agent terminal according to an embodiment of the present invention;
FIG. 4 is a flowchart of a method for processing a voice call according to Embodiment 3 of the present invention;
FIG. 5A and FIG. 5B are a signaling diagram of a method for processing voice information according to an embodiment of the present invention;
FIG. 6A and FIG. 6B are a signaling diagram of another method for processing voice information according to an embodiment of the present invention;
FIG. 7 is a structural diagram of an apparatus for processing a voice call according to Embodiment 4 of the present invention;
FIG. 8 is a structural diagram of another apparatus for processing a voice call according to Embodiment 4 of the present invention;
FIG. 9 is a structural diagram of an apparatus for processing a voice call according to Embodiment 5 of the present invention;
FIG. 10 is a structural diagram of another apparatus for processing a voice call according to Embodiment 5 of the present invention;
FIG. 11 is a structural diagram of an apparatus for processing a voice call according to Embodiment 6 of the present invention;
FIG. 12 is a structural diagram of another apparatus for processing a voice call according to Embodiment 6 of the present invention;
FIG. 13 is a structural diagram of hardware of an apparatus for processing a voice call according to Embodiment 7 of the present invention;
FIG. 14 is a structural diagram of hardware of an apparatus for processing a voice call according to Embodiment 8 of the present invention;
FIG. 15 is a structural diagram of hardware of an apparatus for processing a voice call according to Embodiment 9 of the present invention; and
FIG. 16 is a schematic diagram of a system for processing voice information according to Embodiment 10 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

For ease of understanding of the embodiments of the present invention, the present invention will be explained and described in detail below with reference to the accompanying drawings and specific embodiments, but the embodiments are not intended to limit the embodiments of the present invention.

### Embodiment 1

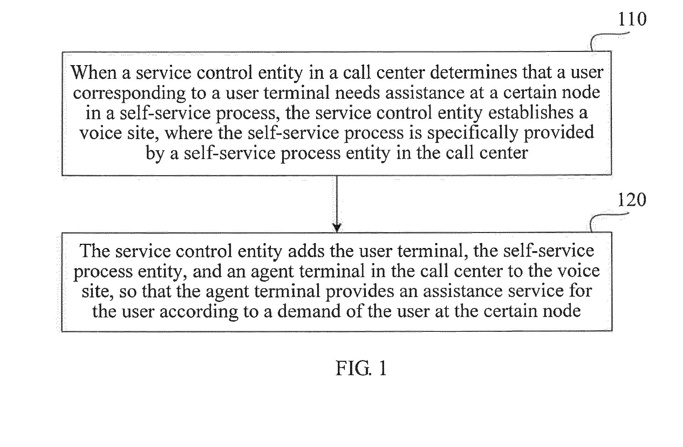

The following uses FIG. 1 as an example to describe in detail a method for processing a voice call according to Embodiment 1 of the present invention. FIG. 1 is a flowchart of the method for processing a voice call according to Embodiment 1 of the present invention. In the embodiment of the present invention, an implementation body is a service control entity, where the service control entity is in a call center. As shown in FIG. 1, this embodiment specifically includes the following steps:
Step 110: When a service control entity in a call center determines that a user corresponding to a user terminal needs assistance at a certain node in a self-service process, the service control entity establishes a voice site, where the self-service process is specifically provided by a self-service process entity in the call center.

Specifically, the user initiates a voice call to the self-service process entity in the call center by using the user terminal; the self-service process entity receives the voice call, and establishes a voice session with the user terminal; the user chooses, by using the established voice session and according to a voice prompt, whether to enter a self-service process, where the self-service process is specifically provided by the self-service process entity in the call center.

When the user chooses to enter the self-service process, the user performs a subsequent operation by using the established voice session and according to a voice prompt played in the self-service process.

When the service control entity in the call center determines that the user needs assistance at a certain node in the self-service process, the service control entity establishes a voice site.

It may be understood that, the determining that a user needs assistance at a certain node in the self-service process specifically means that: when the user performs an operation according to a voice prompt played in the self-service process, the service control entity determines whether the user does not clearly understand content of the voice prompt played in the self-service process and cannot execute a subsequent operation.

Step 120: The service control entity adds the user terminal, the self-service process entity, and an agent terminal in the call center to the voice site, so that the agent terminal provides an assistance service for the user according to a demand of the user at the certain node.

Specifically, after establishing the voice site, the service control entity adds the user terminal, the self-service process entity, and the agent terminal in the call center to the voice site, so that the agent terminal provides an assistance service for the user according to the demand of the user at the certain node.

It may be understood that, after the service control entity adds the user terminal, the self-service process entity, and the agent terminal to the voice site, the user can perform voice communication with the agent terminal by using the user terminal, so that the agent terminal provides the assistance service for the user according to the demand of the user at the certain node in the self-service process.

Optionally, in step 110, the service control entity determines whether the user corresponding to the user terminal needs assistance at the certain node in the self-service process by using the following manner:
receiving, by the service control entity, an assistance message that is sent by the self-service process entity when the self-service process entity receives a help-seeking instruction, where the help-seeking instruction is sent by the user terminal at the certain node in the self-service process; and
determining, by the service control entity according to the assistance message, that the user corresponding to the user terminal needs an assistance service at the certain node in the self-service process.

Specifically, the user performs an operation according to the voice prompt played in the self-service process; when the user is uncertain about the content of the voice prompt played in the self-service process and cannot execute a subsequent operation, the user presses a certain special key (for example, *) or a certain key combination (for example, **#) on the user terminal; and the user terminal generates a help-seeking instruction according to key information entered by the user, where the help-seeking instruction includes the key information, and sends the help-seeking instruction to the self-service process entity, so as to request an assistance service. After receiving the help-seeking instruction that is sent by the user terminal at the certain node in the self-service process, the self-service process entity parses the help-seeking instruction and extracts the key information included in the help-seeking instruction. When determining that the user encounters a problem at the certain node in the self-service process, the self-service process entity generates an assistance message, and sends the assistance message to the service control entity.

The service control entity receives the assistance message, and determines, according to the assistance message, that the user needs an assistance service at the certain node in the self-service process.

Further, in the embodiment of the present invention, the assistance message includes node identity information of the certain node where the user corresponding to the user terminal is in the self-service process.

Specifically, when the self-service process entity determines that the user encounters a problem at the certain node in the self-service process, the self-service process entity acquires the node identity information of the certain node, and adds the node identity information to the assistance message. Optionally, before step 110, the method further includes a step where the service control entity sends an allocate request to an agent management entity and receives an allocate response sent by the agent management entity. By using this step, the agent management entity allocates the user an agent terminal for providing the assistance service; and the service control entity calls the allocated agent terminal , and adds the agent terminal to the voice site, so that the user is provided with the assistance service.

The service control entity sends an allocate request message to an agent management entity in the call center, so that the agent management entity allocates the agent terminal, where the allocate request message includes the node identity information and is used by the agent management entity to send the node identity information to the allocated agent terminal; and
the service control entity receives an allocate response message sent by the agent management entity, where the allocate response message includes identity information of the allocated agent terminal.

Further, the allocate request message includes the node identity information and is used by the agent management entity to send the node identity information to the allocated agent terminal, so that the agent terminal determines the node where the user is in the self-service process.

It may be understood that, the agent terminal locally stores a self-service flowchart, and the self-service flowchart shows all nodes in the self-service process and a relationship among all the nodes in the self-service process; and in the foregoing implementation manner, the agent terminal determines, within the locally stored self-service flowchart and according to the node identity information sent by the agent management entity, the certain node where the user is at.

After the agent management entity allocates the agent terminal, the service control entity receives the allocate response message sent by the agent management entity, where the allocate response message includes the identity information of the agent terminal allocated by the agent management entity.

In step 110, the adding, by the service control entity, the user terminal, the self-service process entity, and an agent terminal in the call center to the voice site, so that the agent terminal provides an assistance service for the user according to a demand of the user at the certain node is specifically:
initiating, by the service control entity, a call request to the agent terminal according to the identity information of the agent terminal; and after receiving a response from the agent terminal, adding, by the service control entity, the agent terminal, the user terminal,
and the self-service process entity to the voice site, so that the agent terminal determines, according to the node identity information, that the user corresponding to the user terminal is at the certain node in the self-service process, and then the agent terminal provides the assistance service for the user according to the demand of the user at the certain node.

Optionally, in step 110, the service control entity may further determine whether the user corresponding to the user terminal needs assistance at the certain node in the self-service process by using the following manner:
receiving, by the service control entity, a query message sent by the agent terminal that monitors a state of the self-service process, where the query message is sent by the agent terminal when the agent terminal determines that an exception occurs in an operation performed by the user corresponding to the user terminal at the certain node;
sending, by the service control entity, the query message to the user terminal by using the self-service process entity, where the query message is used to inquire of the user whether to accept the assistance service provided by the agent terminal;
when the user accepts the assistance service provided by the agent terminal, receiving, by the service control entity, a permit message that is sent by the user terminal by using the self-service process entity; and
determining, by the service control entity according to the permit message, that the user corresponding to the user terminal needs an assistance service at the certain node in the self-service process.

Specifically, when the user performs an operation in the self-service process, the agent terminal monitors a state of the self-service process; if the agent terminal determines that an exception occurs in an operation performed by the user at a certain node in the self-service process, the agent terminal generates a query message and sends the query message to the service control entity, where the query message is used to inquire of the user whether to accept the assistance service provided by the agent terminal.

The service control entity receives the query message, and sends the query message by using the self-service process entity. In the embodiment of the present invention, the user terminal may notify the user of the query message by means of a voice prompt. When the user accepts the assistance service provided by the agent terminal, the user presses a certain special key (for example, #) or a certain key combination (for example, ##*) on the user terminal. The user terminal generates a permit message according to key information entered by the user, where the permit message includes the key information, and sends the permit message to the service control entity by using the self-service process entity.

The service control entity receives the permit message, and determines, according to the permit message, that the user corresponding to the user terminal needs an assistance service at the certain node in the self-service process.

Further, the service control entity further sends the permit message to the agent terminal, so that the agent terminal determines that the user accepts the assistance service provided by the agent terminal; when the service control entity sends a call request, the agent terminal receives the call request; and then the service control entity adds the agent terminal, the self-service process entity, and the user terminal to a voice site, so that the agent terminal provides an assistance service according to a demand of the user at the certain node in the self-service process.

Still further, the determining, by the agent terminal, that an exception occurs on the user at the certain node in the self-service process specifically includes: in an implementation manner, periodically detecting, by a detection module inside the agent terminal, whether an exception occurs on the user corresponding to the user terminal at a certain node, where the exception on the user at a certain node specifically refers to that: a time in which the user stays at the certain node exceeds a time threshold, the user frequently performs an operation at the certain node, or the like; or periodically detecting, by a detection entity in the call center, whether an exception occurs on the user corresponding to the user terminal at a certain node, and sending warning information to the agent terminal, where the warning information includes node identity information of the certain node where the user is at, and the node identity information is used by the agent terminal to determine the certain node.

It may be understood that, the agent terminal locally stores a self-service flowchart, and the self-service flowchart shows all nodes in the self-service process and a relationship among all the nodes in the self-service process; and in the foregoing implementation manner, when the user terminal establishes a voice session with the self-service process entity, the detection module inside the agent terminal may obtain, through detection, a position of the user and a procedure at which the user stays in the self-service flowchart; or the agent terminal determines, within the locally stored self-service flowchart and according to the node identity information included in the warning information, the certain node where the user is at.

Optionally, in the embodiment of the present invention, the method further includes a step where the service control entity forwards to the self-service process entity a jump request message sent by the agent terminal, and forwards to the agent terminal a jump success response message sent by the self-service process entity. By using this step, the agent terminal can instruct, according to a demand of the user, the self-service process entity to cause the user to jump between nodes in the self-service process, and the agent terminal marks, according to the jump success response message, the node where the user is currently at, so that the user can rapidly access the corresponding service entry, which improves the service efficiency and user experience.

The service control entity receives a jump request message sent by the agent terminal, and forwards the jump request message to the self-service process entity, where the jump request message includes target node identity information and is used to instruct the self-service process entity to cause a node where the user is to jump to a target node identified by the target node identity information; and
the service control entity receives a jump success response message sent by the self-service process entity, and forwards the jump success response message to the agent terminal, so that the agent terminal marks, according to the jump success response message and on a self-service flowchart displayed on the agent terminal, the target node as a node where the user is currently at, where the self-service flowchart shows all nodes in the self-service process and a relationship among all the nodes in the self-service process.

Specifically, the agent terminal provides an assistance service for the user, and when it is required to jump from the current node to a target node of a service desired by the user, the agent terminal sends a jump request message to the service control entity; the service control entity receives the jump request message, and forwards the jump request message to the self-service process entity, where the jump request message includes target node identity information and is used to instruct the self-service process entity to cause a node where the user is to jump to a target node identified by the target node identity information.

The self-service process receives the jump request message, causes, according to the target node identity information carried in the jump request message, the node where the user is to jump to the target node identified by the target node identity information in the self-service process, generates a jump success response message, and sends the jump success response message to the service control entity; the service control entity forwards the received jump success response message to the agent terminal, so that the agent terminal marks, according to the jump success response message and on the locally stored self-service flowchart, the target node as the node where the user is currently at.

It may be understood that, the agent terminal locally stores the self-service flowchart; and in the foregoing implementation manner, the agent terminal marks, within the locally stored self-service flowchart and according to the jump success response message, the target node identified by the target node identity information as the node where the user is currently at, and provides an assistance service for the user at the target node.

It should be noted that: the foregoing optional step where the service control entity forwards to the self-service process entity a jump request message sent by the agent terminal, and forwards to the agent terminal a jump success response message sent by the self-service process entity may be executed in a situation in which the agent terminal actively or passively provides the assistance service for the user.

Optionally, in the embodiment of the present invention, the method further includes a step where the service control entity sends a notification message to the agent management entity. By using this step, the agent management entity can determine the node where the user is currently at, which facilitates management of the agent terminal.

The service control entity sends a notification message to the agent management entity, where the notification message includes the target node identity information and is used by the agent management entity to determine, according to the target node identity information, a node where the user assisted by the agent terminal is currently at.

Specifically, after forwarding the jump request message to the self-service process entity, the service control entity may further send a notification message to the agent management entity, where the notification message includes target node identity information and is used by the agent management entity to determine, according to the target node identity information, the node where the user assisted by the agent terminal is currently at, which facilitates uniform management of the agent terminal.

Optionally, the embodiment of the present invention further includes an encryption step as follows, and by using the encryption step, it can be ensured that disclosure of user information is prevented. When the agent terminal provides an assistance service for the user, the service control entity encrypts attribute information of the user.

Specifically, when the agent terminal provides an assistance service for the user, the service control entity encrypts attribute information of the user, so as to prevent disclosure of the attribute information of the user.

In the embodiment of the present invention, the attribute information of the user specifically includes authentication information, authorization information, or the like that is generated by the user terminal according to an instruction entered by the user.

Optionally, the embodiment of the present invention further includes a step where the service control entity starts a recording entity in the call center. By using the step of starting the recording entity, the voice session between the agent terminal and the user can be recorded, so as to facilitate subsequent quality control, which improves the service efficiency.

The service control entity starts the recording entity in the call center to record the voice session between the agent terminal and the user.

Specifically, the service control entity adds the user terminal, the self-service process entity, and the agent terminal to a voice site, and starts the recording entity in the call center to record the voice session between the agent terminal and the user, so as to facilitate subsequent quality control, which improves the service efficiency.

Therefore, by using the method for processing a voice call that is provided in the embodiment of the present invention, when a service control entity in a call center determines that a user corresponding to a user terminal needs assistance at a certain node in a self-service process, the service control entity establishes a voice site, and adds the user terminal, a self-service process entity, and an agent terminal in the call center to the voice site, so that the agent terminal provides an assistance service for the user according to a demand of the user at the certain node. With the technical features that the service control entity establishes a voice site and adds the user terminal, the self-service process entity, and the agent terminal to the voice site, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 2

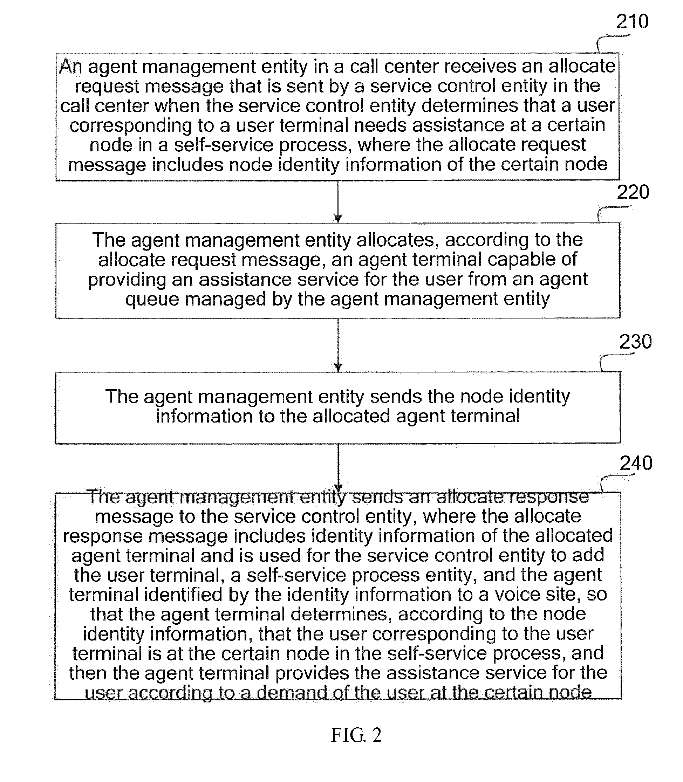

The following uses FIG. 2 as an example to describe in detail a method for processing a voice call according to Embodiment 2 of the present invention. FIG. 2 is a flowchart of the method for processing a voice call according to Embodiment 2 of the present invention. In the embodiment of the present invention, an implementation body is an agent management entity, where the agent management entity is in a call center. As shown in FIG. 2, this embodiment specifically includes the following steps:
Step 210: An agent management entity in a call center receives an allocate request message that is sent by a service control entity in the call center when the service control entity determines that a user corresponding to a user terminal needs assistance at a certain node in a self-service process, where the allocate request message includes node identity information of the certain node.

Specifically, the user initiates a voice call to the self-service process entity in the call center by using the user terminal; the self-service process entity receives the voice call, and establishes a voice session with the user terminal; the user chooses, by using the established voice session and according to a voice prompt, whether to enter a self-service process, where the self-service process is specifically provided by the self-service process entity in the call center.

When the user chooses to enter the self-service process, the user performs a subsequent operation by using the established voice session and according to a voice prompt played in the self-service process.

When the service control entity in the call center determines that the user corresponding to the user terminal needs assistance at a certain node in a self-service process, the service control entity sends an allocate request message to the agent management entity, where the allocate request message includes node identity information of the certain node where the user is in the self-service process.

The foregoing embodiment has described in detail the process where the service control entity determines that the user corresponding to the user terminal needs an assistance service at the certain node in the self-service process, so the details are not described herein again.

Step 220: The agent management entity allocates, according to the allocate request message, an agent terminal capable of providing an assistance service for the user from an agent queue managed by the agent management entity.

Specifically, after receiving the allocate request message, the agent management entity parses the allocate request message; and when determining that the user needs assistance at a certain node in the self-service process, the agent management entity allocates an agent terminal capable of providing an assistance service for the user from an agent queue managed by the agent management entity.

Further, in the embodiment of the present invention, the allocating, by the agent management entity according to the allocate request message, an agent terminal capable of providing an assistance service for the user from an agent queue managed by the agent management entity specifically includes:
In one implementation manner, the allocate request message further includes node type information; and the agent management entity allocates, according to the node type information, an agent terminal capable of providing an assistance service for the user from the agent queue managed by the agent management entity.

For example, the node type information includes: a complaining node type, a serving node type, and the like; and the agent management entity allocates, according to the acquired node type information, an agent terminal capable of providing an assistance service for the user from the agent queue managed by the agent management entity, so as to allocate an agent terminal that is most familiar with the service to provide the assistance service for the user.

In another implementation manner, the agent management entity acquires service attribute information of each agent terminal in the agent queue according to the allocate request message, where the service attribute information specifically includes the number of service times, service time, and the like of each agent terminal; and the agent management entity allocates, according to the acquired service attribute information, an agent terminal capable of providing an assistance service for the user from the agent queue managed by the agent management entity, so as to achieve a balance in pressure distribution among the agent terminals.

For example, after acquiring multiple pieces of service attribute information, the agent management entity compares the multiple pieces of service attribute information, and allocates, according to the number of service times and the service time, an agent terminal of which the number of service times is small and the service time is short to provide the assistance service for the user, so as to achieve a balance in pressure distribution among the agent terminals.

In another implementation manner, the agent management entity acquires, according to the allocate request message, user information corresponding to the user terminal, where the user information specifically includes phone number information of the user, user identity information, user membership information, or the like; and the agent management entity determines a priority of the user by using the user information, and allocates, according to the priority of the user, an agent terminal capable of providing an assistance service for the user from the agent queue managed by the agent management entity, so as to allocate agent terminals of different levels to provide assistance services for users.

For example, when the agent management entity determines, according to the user information, that the priority of the user is a first priority, the agent management entity allocates an agent terminal capable of providing an assistance service for the first priority from the agent queue managed by the agent management entity.

Step 230: The agent management entity sends the node identity information to the allocated agent terminal.

Specifically, after receiving the allocate request message, the agent management entity parses the allocate request message and extracts the node identity information carried in the allocate request message, and then sends the node identity information to the agent terminal allocated in step 220. Step 240: The agent management entity sends an allocate response message to the service control entity, where the allocate response message includes identity information of the allocated agent terminal and is used by the service control entity to add, according to the identity information, the user terminal, the self-service process entity, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

Specifically, after allocating the agent terminal, the agent management entity sends an allocate response message to the service control entity, where the allocate response message includes identity information of the allocated agent terminal and is used by the service control entity to add, according to the identity information, the user terminal, the self-service process entity, and the agent terminal identified by the identity information to the voice site, so that the agent terminal determines, according to the node identity information, that the user is at the certain node in the self-service process, and then the agent terminal provides the assistance service for the user according to the demand of the user at the certain node.

It may be understood that, the agent terminal locally stores a self-service flowchart, and the self-service flowchart shows all nodes in the self-service process and a relationship among all the nodes in the self-service process; and in the foregoing implementation manner, the agent terminal determines, within the locally stored self-service flowchart and according to the node identity information sent by the agent management entity, the certain node where the user is at.

The agent terminal involved in the embodiment of the present invention specifically refers to a terminal capable of establishing a voice session with a user terminal and providing assistance service for a user by using the established voice session. The agent terminal may be implemented in the form of a client, and operated and managed by service personnel, so that a user can perform a voice session with the service personnel at a certain node in the self-service process.

Optionally, before step 210, the method further includes the following step where the agent management entity accepts registration of an agent terminal. By using the step of registering an agent terminal, the agent management entity can conveniently allocate an agent terminal capable of providing an assistance service for the user from the agent queue, which improves the service efficiency.

The agent management entity receives a sign-in message sent by the agent terminal; and
registers the agent terminal according to the sign-in message, and places the registered agent terminal into the agent queue.

Specifically, before execution of step 210, the agent management entity receives a sign-in message sent by the agent terminal, where the sign-in message carries attribute information of the agent terminal, and the attribute information specifically refers to information such as a type, an identity, and a number of the agent terminal; and after receiving the sign-in message, the agent management entity parses the sign-in message and extracts the content carried in the sign-in message, stores, in a database, the attribute information of the agent terminal that is extracted from the sign-in message, and places the agent terminal corresponding to the stored attribute information into the agent queue. Optionally, after step 220, the method further includes a step where the agent management entity sets a state of the agent terminal. By setting the state of the agent terminal, the agent management entity can conveniently manage the agent terminal.

The agent management entity sets a state of the allocated agent terminal to a transparent agent state, and cancels the transparent agent state when the agent terminal stops providing the assistance service for the user, so as to collect statistics on a situation in which the agent terminal serves as a transparent agent to provide an assistance service for a user.

Specifically, after allocating the agent terminal capable of providing the assistance service for the user from the agent queue, the agent management entity sets the state of the allocated agent terminal to the transparent agent state, where the state indicates that the agent terminal is providing assistance service for a user; and cancels the transparent agent state when the agent terminal stops providing the assistance service for the user, that is, sets the state to a released state, so that the agent management entity collects statistics on a situation in which the agent terminal serves as a transparent agent to provide the assistance service for the user.

Still further, in the embodiment of the present invention, the agent management entity further sets the state of the agent terminal, and may use the life cycle of the agent terminal to indicate the state of the agent terminal, where the life cycle includes: an idle state, an exit state, an occupied state, a transparent agent state, a released state, and a maintaining state.

The agent management entity may further associate the state of the agent terminal with the service attribute information, so as to allocate the agent terminal capable of providing the assistance service for the user.

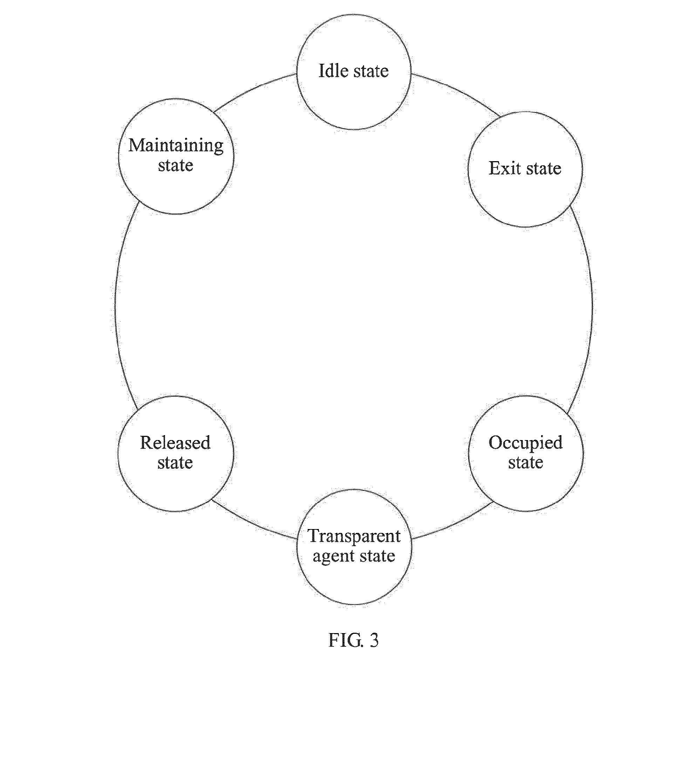

Referring to FIG. 3, FIG. 3 is a schematic diagram showing a life cycle of an agent terminal according to an embodiment of the present invention. In FIG. 3, when a state of an agent terminal changes, the agent management entity also updates the state of the agent terminal. Because the state of the agent terminal has been associated with the service attribute information, the agent management entity may determine the state of the agent terminal according to the service attribute information, and further determine whether the agent terminal is suitable for providing the assistance service for the user.

For example, when an agent terminal registers with or logs in to the agent management entity, the agent management entity sets a state of the agent terminal to an idle state.

When the agent terminal exits the agent management entity, the agent management entity sets the state of the agent terminal to an exit state.

When the agent management entity allocates, according to the allocate request message, the agent terminal to provide an assistance service for a user, the agent management entity sets the state of the agent terminal to an occupied state.

When the agent terminal is providing an assistance service for a user, the agent management entity sets the state of the agent terminal to a transparent agent state.

When the agent terminal has finished providing the assistance service for a user, the agent management entity sets the state of the agent terminal to a released state, that is, cancels the transparent agent state.

When the agent terminal maintains a handshake connection with the agent management entity, the agent management entity sets the state of the agent terminal to a maintaining state.

Optionally, after step 240, the method further includes a step where when the agent terminal needs to perform node jumping in the self-service process entity when providing the assistance service for the user, the agent management entity receives a notification message sent by the service control entity. By using this step, the agent management entity can determine the position and the state of the agent terminal all the time, so that the agent management entity conveniently manages the agent terminal uniformly, which improves the service efficiency.

When the agent terminal jumps from the certain node to another node in the self-service process entity, the agent management entity receives a notification message sent by the service control entity, where the notification message includes an identity of the another node; and determines, according to the identity of the another node, that the user assisted by the agent terminal is currently at the another node.

Specifically, the agent terminal provides the assistance service for the user according to a demand of the user, and when determining that the service required by the user needs to jump from a certain node to another node in the self-service process entity, the agent terminal sends a jump request message to the service control entity. The service control entity receives the jump request message, and forwards the jump request message to the self-service process entity. The self-service process entity receives the jump request message, enables, according to the jump request message, the user to jump between the nodes, generates a jump success response message, and sends the jump success response message to the agent management entity. After receiving the jump success response message, the service control entity sends a notification message to the agent management entity, where the notification message includes an identity of the another node; the agent management entity determines, according to the identity of the another node, that the user assisted by the agent terminal is currently at the another node, that is, the agent management entity determines the current position of the agent terminal according to the identity information of the another node, so that the agent management entity conveniently manages the agent terminal.

It should be noted that: when the agent terminal provides the assistance service for the user, the service control entity detects, at any time, the position of the node where the agent terminal is currently at, so as to send the notification message to the agent management entity.

Therefore, by using the method for processing a voice call that is provided in the embodiment of the present invention, when a service control entity in a call center determines that a user corresponding to a user terminal needs assistance at a certain node in a self-service process, an agent management entity receives an allocate request message sent by the service control, allocates an agent according to the allocate request message, and sends node identity information carried in the allocate request message to the allocated agent terminal , so that the agent terminal determines, according to the node identity information, that the user is at the certain node in the self-service process, and then the agent terminal provides an assistance service for the user according to a demand of the user at the certain node. With the technical features that the agent management entity allocates the agent terminal and sends the node identity information to the allocated agent terminal , the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

For ease of real-time understanding of the present invention, the present invention will be explained and described in detail below with reference to the accompanying drawings and specific embodiments, but the embodiments are not intended to limit the embodiments of the present invention.

### Embodiment 3

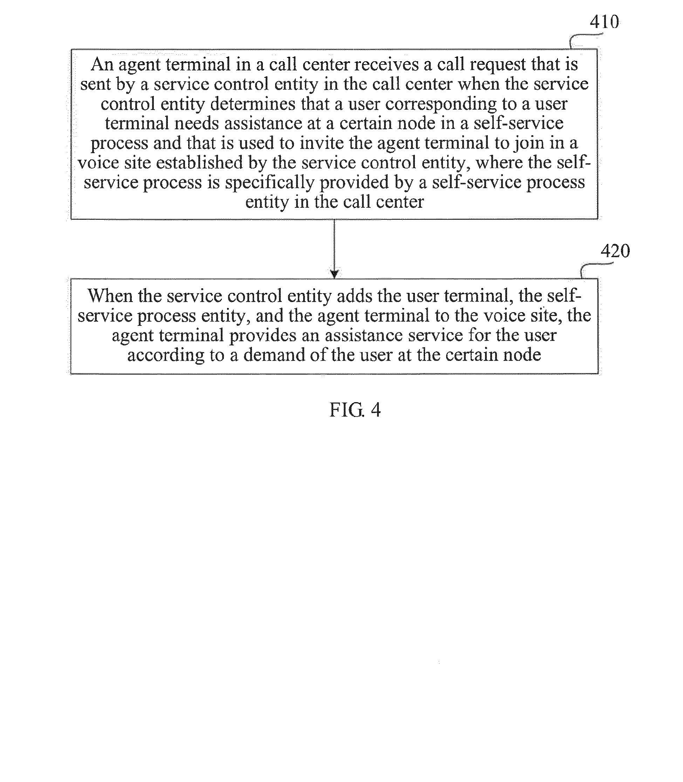

The following uses FIG. 4 as an example to describe in detail a method for processing a voice call according to Embodiment 3 of the present invention. FIG. 4 is a flowchart of the method for processing a voice call according to Embodiment 3 of the present invention. In the embodiment of the present invention, an implementation body is an agent terminal, where the agent terminal is in a call center. As shown in FIG. 4, this embodiment specifically includes the following steps:
Step 410: An agent terminal in a call center receives a call request that is sent by a service control entity in the call center when the service control entity determines that a user corresponding to a user terminal needs assistance at a certain node in a self-service process for inviting the agent terminal to join in a voice site established by the service control entity, where the self-service process is specifically provided by a self-service process entity in the call center.

Specifically, when the service control entity determines that the user corresponding to the user terminal needs assistance at the certain node in the self-service process, the agent terminal in the call center receives the call request that is sent by the service control entity for inviting the agent terminal to join in the voice site established by the service control entity, where the self-service process is specifically provided by the self-service process entity in the call center.

The foregoing embodiment has described in detail the process where the service control entity determines that the user corresponding to the user terminal needs an assistance service at a certain node in the self-service process, initiates the call request to the agent terminal, and establishes the voice site, so the details are not described herein again.

Step 420: When the service control entity adds the user terminal, the self-service process entity, and the agent terminal to the voice site, the agent terminal provides an assistance service for the user according to a demand of the user at the certain node.

Specifically, when the service control entity adds the user terminal, the self-service process entity, and the agent terminal to the voice site, the agent terminal provides the assistance service for the user according to the demand of the user at the certain node.

Optionally, before step 410 of the present invention, the method further includes a step where the agent terminal sends a query message to the user terminal by using the service control entity. By using this step, the agent terminal can passively provide the assistance service for the user, which improves the service quality.

When the agent terminal determines that an exception occurs on the user corresponding to the user terminal at the certain node, the agent terminal sends a query message to the user terminal by using the service control entity, where the query message is used to inquire of the user whether to accept the assistance service provided by the agent terminal.

Specifically, when the agent terminal determines that an exception occurs on the user corresponding to the user terminal at the certain node in the self-service process, the agent terminal sends a query message to the user terminal by using the service control entity, where the query message is used to inquire of the user whether to accept the assistance service provided by the agent terminal.

Step 410 specifically includes: receiving, by the agent terminal, the call request that is sent by the service control entity when the service control entity receives a permit message sent by the user terminal and determines, according to the permit message, that the user corresponding to the user terminal needs assistance at the certain node in the self-service process.

Further, when the user performs an operation in the self-service process, if the agent terminal determines that an exception occurs on the user at a certain node in the self-service process, the agent terminal generates a query message and sends the query message to the service control entity, where the query message is used to inquire of the user whether to accept the assistance service provided by the agent terminal.

The service control entity receives the query message, and sends the query message by using the self-service process entity. In the embodiment of the present invention, the user terminal may notify the user of the query message by means of a voice prompt. When the user accepts the assistance service provided by the agent terminal, the user presses a certain special key (for example, #) or a certain key combination (for example, ##*) on the user terminal. The user terminal generates a permit message according to key information entered by the user, where the permit message includes the key information, and sends the permit message to the service control entity by using the self-service process entity.

The service control entity receives the permit message, determines, according to the permit message, that the user corresponding to the user terminal needs an assistance service at the certain node in the self-service process, and sends a call request to the agent terminal.

Still further, the service control entity further sends the permit message to the agent terminal, so that the agent terminal determines that the user accepts the assistance service provided by the agent terminal; when the service control entity initiates a call request, the agent terminal receives the call request; and then the service control entity adds the agent terminal, the self-service process entity, and the user terminal to the voice site, so that the agent terminal provides an assistance service for the user according to a demand of the user at the certain node in the self-service process.

Still further, the determining, by the agent terminal, that an exception occurs on the user at the certain node in the self-service process specifically includes: in an implementation manner, periodically detecting, by a detection module inside the agent terminal, whether an exception occurs on the user corresponding to the user terminal at a certain node, where the exception on the user at a certain node specifically refers to that: a time in which the user stays at the certain node exceeds a time threshold, the user frequently performs an operation on the certain node, or the like; or periodically detecting, by a detection entity in the call center, whether an exception occurs on the user corresponding to the user terminal at a certain node, and sending warning information to the agent terminal, where the warning information includes node identity information of the certain node where the user is at, and the node identity information is used by the agent terminal to determine the certain node.

For example, whether an exception occurs on the user at a certain node may be determined by detecting information about a time in which the user stays at the certain node in the self-service process, or detecting the number of times the user performs, by using the user terminal, operations on the node in the self-service process.

It may be understood that, the agent terminal locally stores a self-service flowchart, and the self-service flowchart shows all nodes in the self-service process and a relationship among all the nodes in the self-service process; and in the foregoing implementation manner, when the user terminal establishes a voice session with the self-service process entity, the detection module inside the agent terminal may obtain, through detection, a position of the user and a procedure at which the user stays in the self-service process; or the agent terminal determines, within the locally stored self-service flowchart and according to the node identity information included in the warning information, the certain node where the user is at.

Optionally, before step 410 of the present invention, the method further includes a step where the agent terminal receives node identity information sent by an agent management entity in the call center. By using this step, the agent terminal can actively provide the assistance service for the user, which improves the service quality.

The agent terminal receives node identity information, sent by an agent management entity in the call center, of the certain node where the user corresponding to the user terminal is in the self-service process, so that the agent terminal determines, according to the node identity information, that the user corresponding to the user terminal is at the certain node in the self-service process.

Specifically, the service control entity sends an allocate request message to the agent management entity, where the allocate request message is used by the agent management entity to allocate an agent for providing the assistance service for the user.

Further, the allocate request message includes the node identity information; the agent management entity extracts the node identity information, and sends the node identity information to the allocated agent terminal , so that the agent terminal determines, according to the node identity information, that the user is at the certain node in the self-service process.

It may be understood that, the agent terminal locally stores a self-service flowchart, and the self-service flowchart shows all nodes in the self-service process and a relationship among all the nodes in the self-service process; and in the foregoing implementation manner, the agent terminal determines, within the locally stored self-service flowchart and according to the node identity information sent by the agent management entity, the certain node where the user is at.

Optionally, the embodiment of the present invention further includes the following jumping step. By using the following jumping step, the agent terminal can instruct, according to a demand of the user, the self-service process entity to cause the user to jump between the nodes in the self-service process, and the agent terminal marks, according to the jump success response message, the node where the user is currently at, so that the user can rapidly access the corresponding service entry, which improves the service efficiency and user experience.

The agent terminal sends a jump request message to the self-service process entity by using the service control entity, where the jump request message includes target node identity information and is used to instruct the self-service process entity to cause a node where the user is to jump to a target node identified by the target node identity information;
the agent terminal receives a jump success response message that is forwarded by the service control entity and sent by the self-service process entity; and
the agent terminal marks, according to the jump success response message and on a self-service flowchart displayed on the agent terminal, the target node as a node where the user is currently at, where the self-service flowchart shows all nodes in the self-service process and a relationship among all the nodes in the self-service process.

Specifically, the agent terminal provides an assistance service for a user according to a demand of the user, and when it is required to jump from the current node to a target node of a service desired by the user, the agent terminal sends a jump request message to the service control entity, where the jump request message includes target node identity information and is used to instruct the self-service process entity to cause a node where the user is to jump to a target node identified by the target node identity information.

After receiving the jump request message, the self-service process entity causes, according to the target node identity information carried in the jump request message, the node where the user is to jump to the target node identified by the target node identity information in the self-service process, generates a jump success response message, and sends the jump success response message to the service control entity. The service control entity forwards the jump success response message to the agent terminal. The agent terminal jumps from the current node position to a target node position in the local self-service flowchart according to the jump success response message, marks, on the self-service flowchart, the target node as the node where the user is currently at, and provides the corresponding assistance service for the user at the target node, which enables the agent terminal to rapidly provide the assistance service for the user.

Optionally, after the agent terminal jumps to the target node, the agent terminal may further select, according to a type of the target node, whether to continue to provide the assistance service for the user.

When the target node is a serving device, the agent terminal stops providing the corresponding assistance service for the user.

Specifically, when the target node to which the agent terminal jumps is a serving device, the agent terminal stops providing the assistance service for the user. In an implementation of the present invention, the serving device is specifically a manual agent (a manual customer service). That is, when the target node to which the agent terminal jumps is a manual agent, the agent terminal stops providing the assistance service for the user, and the manual agent directly performs voice communication with the user to provide a service for the user.

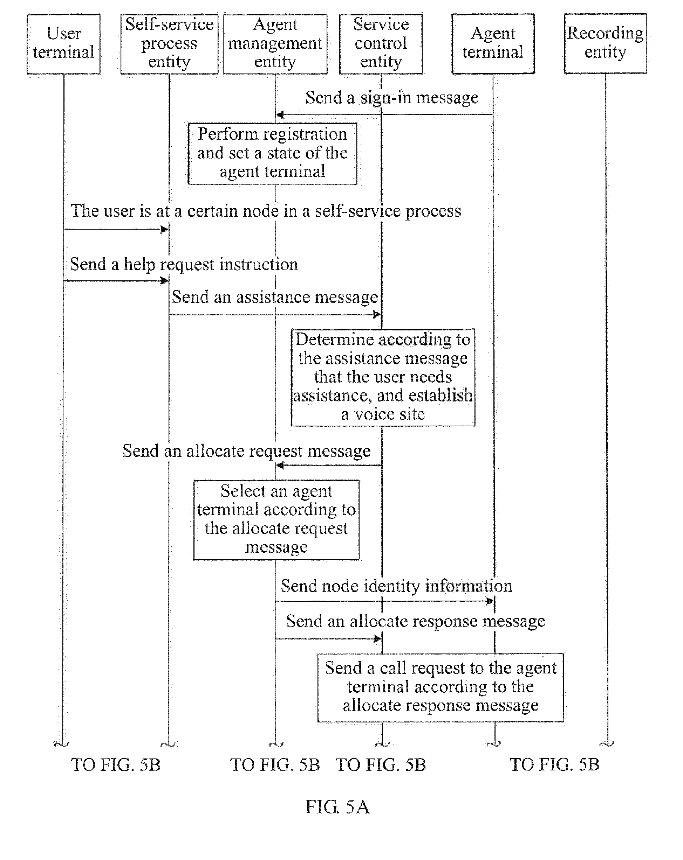

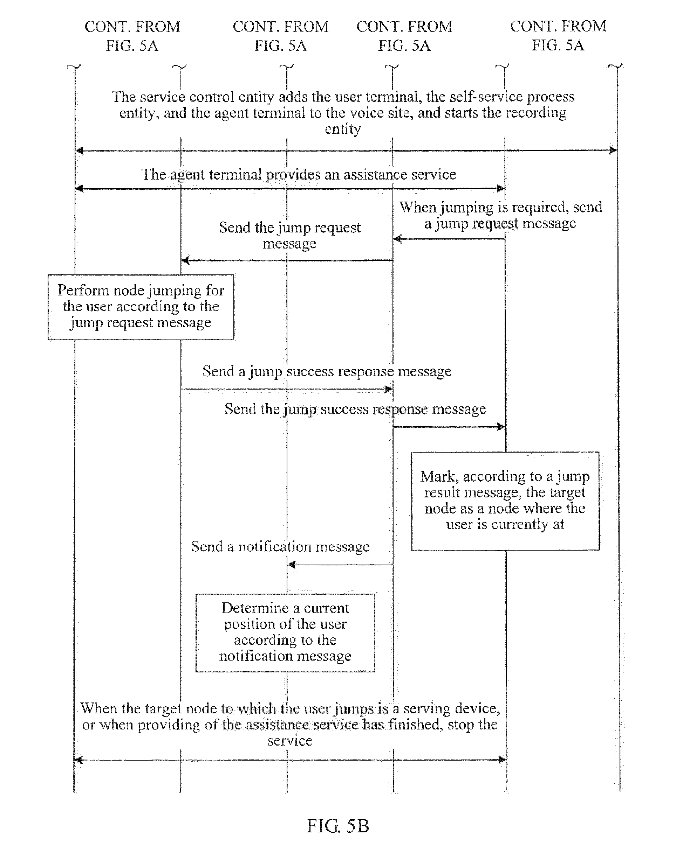

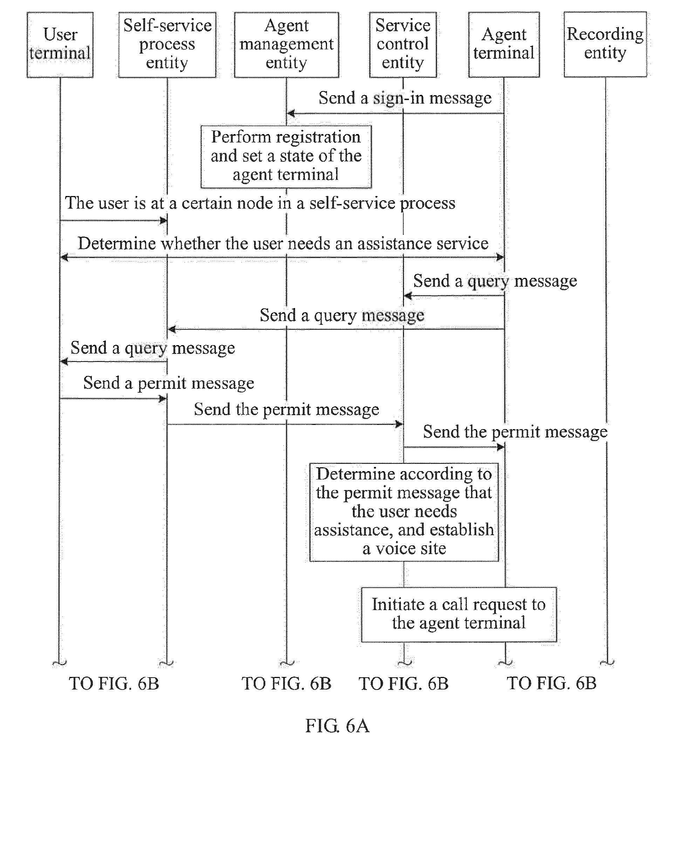

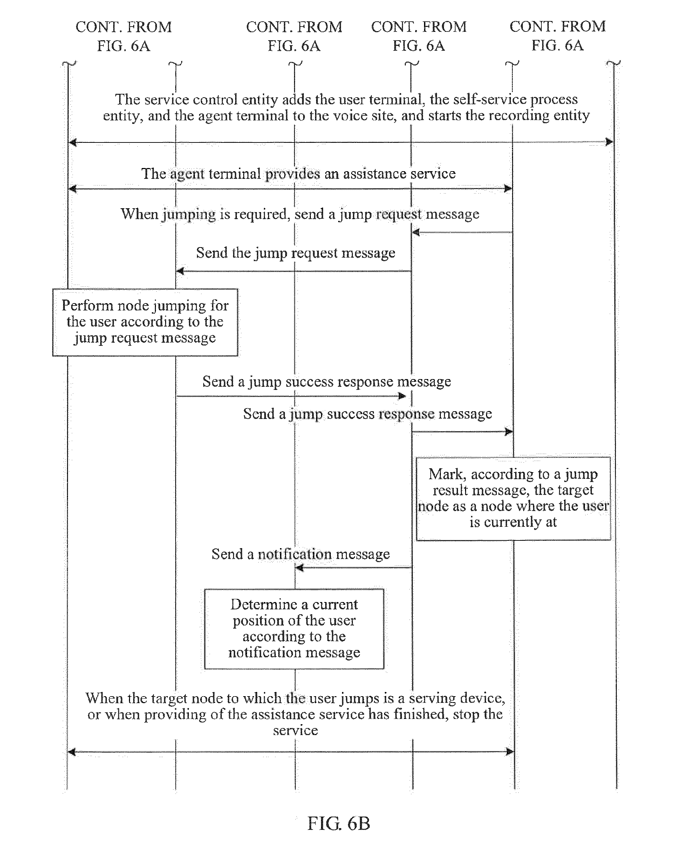

Therefore, by using the method for processing a voice call that is provided in the embodiment of the present invention, when a service control entity determines that a user corresponding to a user terminal needs assistance at a certain node in a self-service process, an agent terminal joins in, according to a call made by the service control entity, a voice site established by the service control entity, and provides an assistance service for the user according to a demand of the user at the certain node. With the technical features that when the service control entity determines that the user corresponding to the user terminal needs assistance at the certain node in the self-service process, the agent terminal joins in the voice site and provides the assistance service for the user according to the demand of the user at the certain node, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience. Further, FIG. 5A and FIG. 5B, and FIG. 6A and FIG. 6B are separately a signaling diagram of a method for processing a voice call according to an embodiment of the present invention. In the signaling diagram of FIG. 5A and FIG. 5B, when the user actively asks for help, the agent terminal allocated by the agent management entity provides an assistance service for the user. In the signaling diagram of FIGs. 6A and 6B, when the agent terminal determines that an exception occurs on the user at a certain node in the self-service process, the agent terminal provides the assistance service for the user. The methods for processing a voice call in FIG. 5A and FIG. 5B, and FIG. 6A and FIG. 6B may both be executed according to the procedures described in the forgoing embodiments, so the details are not described herein again.

### Embodiment 4

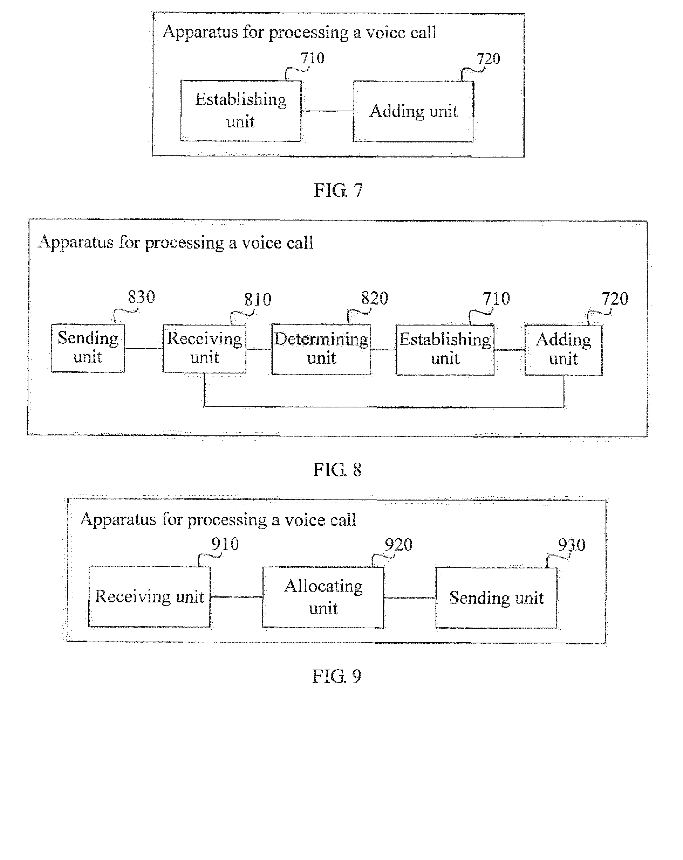

All the methods described in the foregoing embodiments can implement a method for processing a voice call. Correspondingly, Embodiment 4 of the present invention further provides an apparatus for processing a voice call, so as to implement the method for processing a voice call in Embodiment 1. As shown in FIG. 7, the apparatus includes an establishing unit 710 and an adding unit 720.

The establishing unit 710 is configured to: when it is determined that a user corresponding to a user terminal needs assistance at a certain node in a self-service process, establish a voice site, where the self-service process is specifically provided by a self-service process entity in a call center.

The adding unit 720 is configured to add the user terminal, the self-service process entity, and an agent terminal in the call center to the voice site, so that the agent terminal provides an assistance service for the user according to a demand of the user at the certain node.

As shown in FIG. 8, the apparatus further includes: a receiving unit 810, configured to receive an assistance message that is sent by the self-service process entity when the self-service process entity receives a help-seeking instruction, where the help-seeking instruction is sent by the user terminal at the certain node in the self-service process; and configured to transmit the assistance message to a determining unit.

The apparatus further includes the determining unit 820, configured to receive the assistance message from the receiving unit, and determine, according to the assistance message, that the user corresponding to the user terminal needs an assistance service at the certain node in the self-service process.

The assistance message received by the receiving unit 810 includes node identity information of the certain node;
as shown in FIG. 8, when the agent terminal actively provides the assistance service for the user, the apparatus further includes a sending unit 830, configured to send an allocate request message to an agent management entity in the call center, so as to request the agent management entity to allocate the agent terminal, where the allocate request message includes the node identity information and is used by the agent management entity to send the node identity information to the allocated agent terminal;
the receiving unit 810 is further configured to receive an allocate response message sent by the agent management entity, where the allocate response message includes identity information of the allocated agent terminal ; and configured to transmit the identity information of the agent terminal to the adding unit; and
the adding unit 720 is specifically configured to receive the identity information of the agent terminal from the receiving unit, and add the user terminal, the self-service process entity, and the agent terminal identified by the identity information to the voice site, so that the agent terminal determines, according to the node identity information, that the user corresponding to the user terminal is at the certain node in the self-service process, and then the agent terminal provides an assistance service for the user according to the demand of the user at the certain node.

As shown in FIG. 8, when the agent terminal passively provides the assistance service for the user, the apparatus further includes a receiving unit 810, configured to receive a query message sent by the agent terminal that monitors a state of the self-service process, where the query message is sent by the agent terminal when the agent terminal determines that an exception occurs on an operation performed by the user corresponding to the user terminal at the certain node; and configured to transmit the query message to the sending unit;
the sending unit 830 is configured to receive the query message from the receiving unit, and send the query message to the user terminal by using the self-service process entity, where the query message is used to inquire of the user whether to accept the assistance service provided by the agent terminal;
the receiving unit 810 is further configured to: when the user accepts the assistance service provided by the agent terminal, receive a permit message that is sent by the user terminal by using the self-service process entity, and configured to transmit the permit message to the determining unit; and
the determining unit 820 is further configured to receive the permit message from the receiving unit, and determine, according to the permit message, that the user corresponding to the user terminal needs an assistance service at the certain node in the self-service process.

In the embodiment of the present invention, when the agent terminal actively or passively provides the assistance service for the user, the receiving unit 810 is further configured to receive a jump request message sent by the agent terminal, and configured to transmit the jump request message to the sending unit; and
the sending unit 830 is further configured to receive the jump request message from the receiving unit, and forward the jump request message to the self-service process entity, where the jump request message includes target node identity information and is used to instruct the self-service process entity to cause a node where the user is to jump to a target node identified by the target node identity information.

The receiving unit 810 is further configured to receive a jump success response message sent by the self-service process entity, and configured to transmit the jump success response message to the sending unit; and
the sending unit 830 is further configured to receive the jump success response message from the receiving unit, and forward the jump success response message to the agent terminal, so that the agent terminal marks, according to the jump success response message and on a self-service flowchart displayed on the agent terminal, the target node as a node where the user is currently at, where the self-service flowchart shows all nodes in the self-service process and a relationship among all the nodes in the self-service process.

The sending unit 830 is further configured to send a notification message to the agent management entity, where the notification message includes the target node identity information and is used by the agent management entity to determine, according to the target node identity information, a node where the user assisted by the agent terminal is currently at.

Therefore, by using the apparatus for processing a voice call that is provided in the embodiment of the present invention, when the apparatus determines that a user corresponding to a user terminal needs assistance at a certain node in a self-service process, the apparatus establishes a voice site, and adds the user terminal, a self-service process entity, and an agent terminal in a call center to the voice site, so that the agent terminal provides an assistance service for the user according to a demand of the user at the certain node. With the technical features that the apparatus establishes the voice site and adds the user terminal, the self-service process entity, and the agent terminal to the voice site, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 5

All the methods described in the foregoing embodiments can implement a method for processing a voice call. Correspondingly, Embodiment 5 of the present invention further provides an apparatus for processing a voice call, so as to implement the method for processing a voice call in Embodiment 2. As shown in FIG. 9, the apparatus includes a receiving unit 910, an allocating unit 920, and a sending unit 930.

The receiving unit 910 is configured to receive an allocate request message that is sent by a service control entity in a call center when the service control entity determines that a user corresponding to a user terminal needs assistance at a certain node in a self-service process, where the allocate request message includes node identity information of the certain node; and configured to transmit the allocate request message to the allocating unit 920; and transmit the node identity information to the sending unit.

The allocating unit 920 is configured to receive the allocate request message from the receiving unit, and allocate, according to the allocate request message, an agent terminal capable of providing an assistance service for the user from an agent queue managed by the apparatus.

The sending unit 930 is configured to receive the node identity information from the receiving unit, and send the node identity information to the allocated agent terminal.

The sending unit 930 is further configured to send an allocate response message to the service control entity, where the allocate response message includes identity information of the allocated agent terminal and is used by the service control entity to add the user terminal, the self-service process entity, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

The allocating unit 920 is specifically configured to acquire, according to the allocate request message, user information corresponding to the user terminal, determine a priority of the user by using the user information, and allocate, according to the priority of the user, the agent terminal capable of providing the assistance service for the user from the agent queue managed by the apparatus; or
in a case in which the allocate request message received by the receiving unit 910 further includes node type information,
the allocating unit 920 is specifically configured to allocate, according to the node type information, the agent terminal capable of providing the assistance service for the user from the agent queue managed by the apparatus.

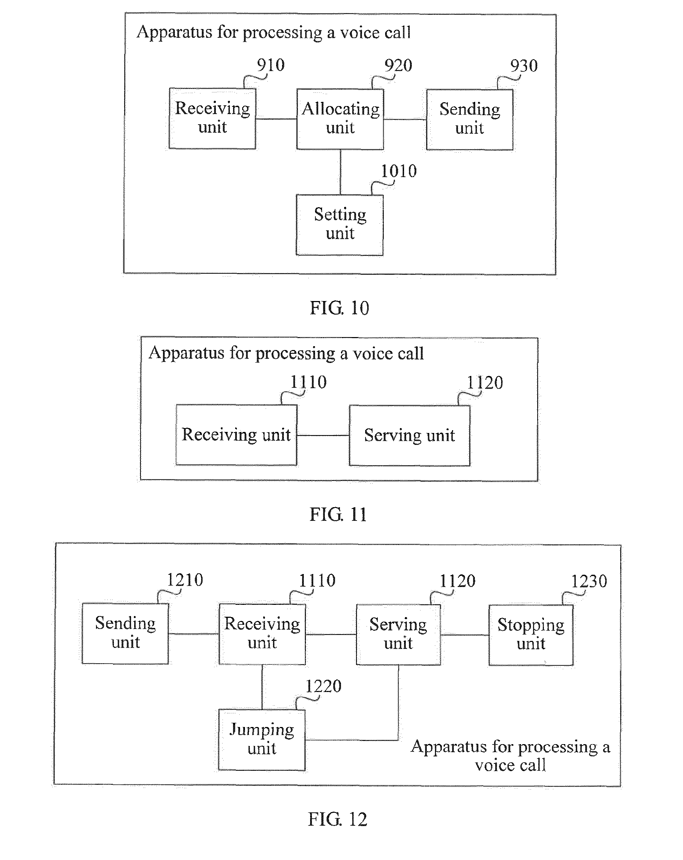

As shown in FIG. 10, the apparatus further includes a setting unit 1010, configured to set a state of the allocated agent terminal to a transparent agent state, and cancel the transparent agent state when the agent terminal stops providing the assistance service for the user, so as to collect statistics on a situation in which the agent terminal serves as a transparent agent to provide an assistance service for a user.

The receiving unit 910 is further configured to: when the agent terminal jumps from the certain node to another node in the self-service process entity, receive a notification message sent by the service control entity, where the notification message includes an identity of the another node; and determine, according to the identity of the another node, that the user assisted by the agent terminal is currently at the another node.

Therefore, by using the apparatus for processing a voice call that is provided in the embodiment of the present invention, when a service control entity in a call center determines that a user corresponding to a user terminal needs assistance at a certain node in a self-service process, the apparatus receives an allocate request message sent by the service control entity, allocates an agent according to the allocate request message, and sends node identity information carried in the allocate request message to the allocated agent terminal , so that the agent terminal determines, according to the node identity information, that the user is at the certain node in the self-service process, and then the agent terminal provides an assistance service for the user according to a demand of the user at the certain node. With the technical features that the apparatus allocates the agent terminal and sends the node identity information to the allocated agent terminal , the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 6

All the methods described in the foregoing embodiments can implement a method for processing a voice call. Correspondingly, Embodiment 6 of the present invention further provides an apparatus for processing a voice call, so as to implement the method for processing a voice call in Embodiment 3. As shown in FIG. 11, the apparatus includes a receiving unit 1110 and a serving unit 1120.

The receiving unit 1110 is configured to receive a call request that is sent by a service control entity in a call center when the service control entity determines that a user corresponding to a user terminal needs assistance at a certain node in a self-service process for inviting the apparatus to join in a voice site established by the service control entity, where the self-service process is specifically provided by a self-service process entity in the call center.

The serving unit 1120 is configured to: when the service control entity adds the user terminal, the self-service process entity, and the apparatus to the voice site, provide an assistance service for the user according to a demand of the user at the certain node.

The serving unit 1120 is specifically configured to display the self-service process, and display, in the self-service process, a certain node where the user is in the self-service process.

As shown in FIG. 12, when the agent terminal passively provides the assistance service for the user, the apparatus further includes a sending unit 1210, configured to: when it is determined that an exception occurs on the user corresponding to the user terminal at the certain node, send a query message to the user terminal by using the service control entity, where the query message is used to inquire of the user whether to accept the assistance service provided by the apparatus; and
the receiving unit 1110 is specifically configured to receive the call request that is sent by the service control entity when the service control entity receives a permit message sent by the user terminal and determines, according to the permit message, that the user corresponding to the user terminal needs assistance at the certain node in the self-service process.

As shown in FIG. 12, when the agent terminal actively provides the assistance service for the user, the receiving unit 1110 is further configured to receive node identity information, sent by an agent management entity in the call center, of the certain node where the user corresponding to the user terminal is in the self-service process, and configured to determine, according to the node identity information, that the user corresponding to the user terminal is at the certain node in the self-service process.

In the embodiment of the present invention, when the agent terminal actively or passively provides the assistance service for the user, the apparatus further includes:
a jumping unit 1220, configured to instruct, by using the service control entity, the self-service process entity to cause a node where the user is to jump to a target node identified by target node identity information.

The receiving unit 1110 is further configured to receive a jump success response message that is forwarded by the service control entity and sent by the self-service process entity, and configured to transmit the jump success response message to the jumping unit; and
the jumping unit 1220 is further configured to receive the jump success response message from the receiving unit, jump to the target node according to the jump success response message, and mark, on a self-service flowchart displayed on the apparatus, the target node as a node where the user is currently at, where the self-service flowchart shows all nodes in the self-service process and a relationship among all the nodes in the self-service process.

Further, when the agent terminal passively provides the assistance service for the user, the sending unit 1210 is further configured to: when it is required to jump from any node to another node in the self-service process entity, send a jump request message to the self-service process entity by using the service control entity, where the jump request message includes target node identity information;
the receiving unit 1110 is further configured to receive a jump success response message that is forwarded by the service control entity and sent by the self-service process entity, and configured to transmit the jump success response message to the jumping unit; and the jumping unit 1220 is further configured to receive the jump success response message from the receiving unit, and jump, according to the jump success response message, to a target node identified by the target node identity information.

When the agent terminal actively provides the assistance service for the user, the apparatus further includes a sending unit 1210, configured to: when it is required to jump from any node to another node in the self-service process entity, send a jump request message to the self-service process entity by using the service control entity, where the jump request message includes target node identity information;
the receiving unit 1110 is further configured to receive a jump success response message that is forwarded by the service control entity and sent by the self-service process entity, and configured to transmit the jump success response message to the jumping unit; and the jumping unit 1220 is further configured to receive the jump success response message from the receiving unit, and jump, according to the jump success response message, to a target node identified by the target node identity information.

The serving unit 1120 is further configured to display a target node position in the self-service process.

As shown in FIG. 12, the apparatus further includes a stopping unit 1230, configured to: when the target node is a serving device, stop providing the corresponding assistance service for the user.

Therefore, by using the apparatus for processing a voice call that is provided in the embodiment of the present invention, when a service control entity determines that a user corresponding to a user terminal needs assistance at a certain node in a self-service process, the apparatus joins in, according to a call made by the service control entity, a voice site established by the service control entity, and provides an assistance service for the user according to a demand of the user at the certain node. With the technical features that when the service control entity determines that the user corresponding to the user terminal needs assistance at the certain node in the self-service process, the apparatus joins in the voice site and provides the assistance service for the user according to the demand of the user at the certain node, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 7

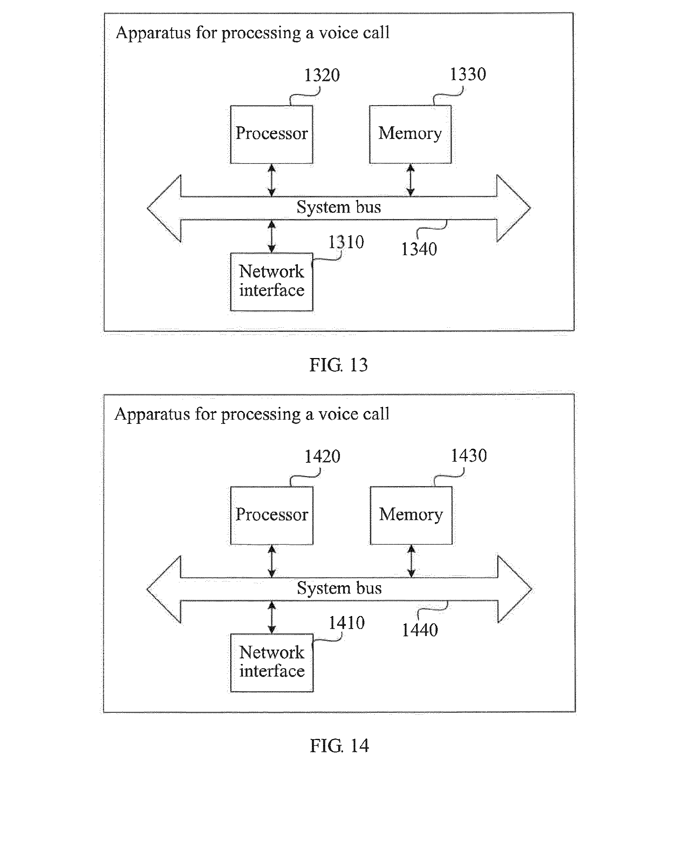

In addition, the apparatus for processing a voice call according to Embodiment 4 of the present invention may also be implemented in the following manner, so as to implement the method for processing a voice call in Embodiment 1 of the present invention. As shown in FIG. 13, the apparatus for processing a voice call includes a network interface 1310, a processor 1320, and a memory 1330. A system bus 1340 is configured to connect the network interface 1310, the processor 1320, and the memory 1330.

The network interface 1310 is configured to communicate with a user terminal, a self-service process entity, an agent management entity, and an agent terminal.

The memory 1330 may be a permanent memory such as a hard disk drive or a flash memory. The memory 1330 is configured to store an application program, where the application program includes an instruction which can be used to cause the processor 1320 to execute the following procedure:
when it is determined that a user corresponding to a user terminal needs assistance at a certain node in a self-service process, establishing a voice site, where the self-service process is specifically provided by a self-service process entity in a call center; and
adding the user terminal, the self-service process entity, and an agent terminal in the call center to the voice site, so that the agent terminal provides an assistance service for the user according to a demand of the user at the certain node.

Further, the instruction, which can be used to cause the processor 1320 to execute the procedure of determining that a user corresponding to a user terminal needs assistance at a certain node in a self-service process, of the application program stored in the memory 1330 is specifically an instruction for executing the following procedure:
receiving an assistance message that is sent by the self-service process entity when the self-service process entity receives a help-seeking instruction, where the help-seeking instruction is sent by the user terminal at the certain node in the self-service process; and
determining, according to the assistance message, that the user corresponding to the user terminal needs an assistance service at the certain node in the self-service process.

Further, the received assistance message includes node identity information of the certain node; the application program stored in the memory 1330 further includes an instruction which can be used to cause the processor 1320 to execute the following procedure:
sending an allocate request message to an agent management entity in the call center, so as to request the agent management entity to allocate the agent terminal, where the allocate request message includes the node identity information and is used by the agent management entity to send the node identity information to the allocated agent terminal ;
   and
receiving an allocate response message sent by the agent management entity, where the allocate response message includes identity information of the allocated agent terminal ;
   and
further, the instruction, which can be used to cause the processor 1320 to execute the procedure of adding the user terminal, the self-service process entity, and an agent terminal in the call center to the voice site, so that the agent terminal provides an assistance service for the user according to a demand of the user at the certain node, of the application program stored in the memory 1330 is specifically an instruction for executing the following procedure:
   adding the user terminal, the self-service process entity, and the agent terminal identified by the identity information to the voice site, so that the agent terminal determines,
   according to the node identity information, that the user corresponding to the user terminal is at the certain node in the self-service process, and then the agent terminal provides the assistance service for the user according to the demand of the user at the certain node.

Further, the instruction, which can be used to cause the processor 1320 to execute the procedure of determining that a user corresponding to a user terminal needs assistance at a certain node in a self-service process, of the application program stored in the memory 1330 is specifically an instruction for executing the following procedure:
receiving a query message sent by the agent terminal that monitors a state of the self-service process, where the query message is sent by the agent terminal when the agent terminal determines that an exception occurs in an operation performed by the user corresponding to the user terminal at the certain node;
sending the query message to the user terminal by using the self-service process entity, where the query message is used to inquire of the user whether to accept the assistance service provided by the agent terminal;
when the user accepts the assistance service provided by the agent terminal, receiving a permit message that is sent by the user terminal by using the self-service process entity;
and
determining, according to the permit message, that the user corresponding to the user terminal needs an assistance service at the certain node in the self-service process.

Further, the application program stored in the memory 1330 further includes an instruction which can be used to cause the processor 1320 to execute the following procedure:
receiving a jump request message sent by the agent terminal, and forwarding the jump request message to the self-service process entity, where the jump request message includes target node identity information and is used to instruct the self-service process entity to cause a node where the user is to jump to a target node identified by the target node identity information.

Further, the application program stored in the memory 1330 further includes an instruction which can be used to cause the processor 1320 to execute the following procedure:
receiving a jump success response message sent by the self-service process entity, and forwarding the jump success response message to the agent terminal, so that the agent terminal marks, according to the jump success response message and on a self-service flowchart displayed on the agent terminal, the target node as a node where the user is currently at, where the self-service flowchart shows all nodes in the self-service process and a relationship among all the nodes in the self-service process.

Further, the application program stored in the memory 1330 further includes an instruction which can be used to cause the processor 1320 to execute the following procedure:
sending a notification message to the agent management entity, where the notification message includes the target node identity information and is used by the agent management entity to determine, according to the target node identity information, a node where the user assisted by the agent terminal is currently at.

Therefore, by using the apparatus for processing a voice call that is provided in the embodiment of the present invention, when the apparatus determines that a user corresponding to a user terminal needs assistance at a certain node in a self-service process, the apparatus establishes a voice site, and adds the user terminal, a self-service process entity, and an agent terminal in a call center to the voice site, so that the agent terminal provides an assistance service for the user according to a demand of the user at the certain node. With the technical features that the apparatus establishes the voice site and adds the user terminal, the self-service process entity, and the agent terminal to the voice site, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 8

In addition, the apparatus for processing a voice call according to Embodiment 5 of the present invention may also be implemented in the following manner, so as to implement the method for processing a voice call in Embodiment 2 of the present invention. As shown in FIG. 14, the apparatus for processing a voice call includes a network interface 1410, a processor 1420, and a memory 1430. A system bus 1440 is configured to connect the network interface 1410, the processor 1420, and the memory 1430.

The network interface 1410 is configured to communicate with a self-service process entity, a service control entity, and an agent terminal.

The memory 1430 may be a permanent memory such as a hard disk drive or a flash memory. The memory 1430 is configured to store an application program, where the application program includes an instruction which can be used to cause the processor 1420 to execute the following procedure:
receiving an allocate request message that is sent by a service control entity in a call center when the service control entity determines that a user corresponding to a user terminal needs assistance at a certain node in a self-service process, where the allocate request message includes node identity information of the certain node;
allocating, according to the allocate request message, an agent terminal capable of providing an assistance service for the user from an agent queue managed by the apparatus;
sending the node identity information to the allocated agent terminal ; and sending an allocate response message to the service control entity, where the allocate response message includes identity information of the allocated agent terminal and is used by the service control entity to add the user terminal, the self-service process entity, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

Further, the instruction, which can be used to cause the processor 1420 to execute the procedure of allocating, according to the allocate request message, an agent terminal capable of providing an assistance service for the user from an agent queue managed by an agent management entity, of the application program stored in the memory 1430 is specifically an instruction for executing the following procedure:
acquiring, according to the allocate request message, user information corresponding to the user terminal, determining a priority of the user by using the user information, and allocating, according to the priority of the user, an agent terminal capable of providing an assistance service for the user from the agent queue managed by the apparatus; or
in a case in which the received allocate request message further includes node type information, allocating, according to the node type information, an agent terminal capable of providing an assistance service for the user from the agent queue managed by the apparatus.

Further, the application program stored in the memory 1430 further includes an instruction which can be used to cause the processor 1420 to execute the following procedure:
setting a state of the allocated agent terminal to a transparent agent state, and canceling the transparent agent state when the agent terminal stops providing the assistance service for the user, so as to collect statistics on a situation in which the agent terminal serves as a transparent agent to provide an assistance service for a user.

Further, the application program stored in the memory 1430 further includes an instruction which can be used to cause the processor 1420 to execute the following procedure:
when the agent terminal jumps from the certain node to another node in the self-service process entity, receiving a notification message sent by the service control entity, where the notification message includes an identity of the another node; and determining, according to the identity of the another node, that the user assisted by the agent terminal is currently at the another node.

Therefore, by using the apparatus for processing a voice call that is provided in the embodiment of the present invention, when a service control entity in a call center determines that a user corresponding to a user terminal needs assistance at a certain node in a self-service process, the apparatus receives an allocate request message sent by the service control, allocates an agent according to the allocate request message, and sends node identity information carried in the allocate request message to the allocated agent terminal , so that the agent terminal determines, according to the node identity information, that the user is at the certain node in the self-service process, and then the agent terminal provides an assistance service for the user according to a demand of the user at the certain node. With the technical features that the apparatus allocates the agent terminal and sends the node identity information to the allocated agent terminal , the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 9

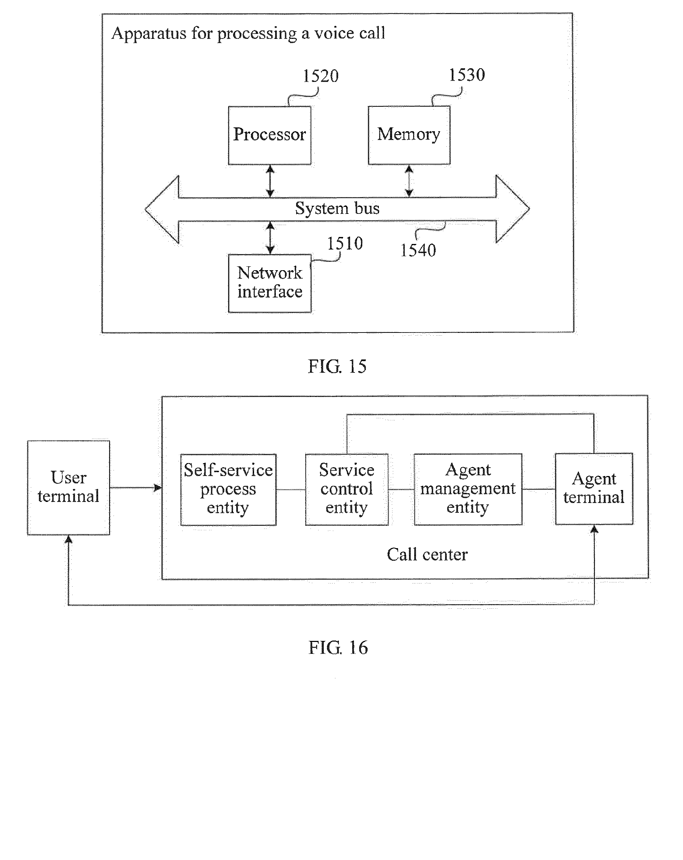

In addition, the apparatus for processing a voice call according to Embodiment 6 of the present invention may also be implemented in the following manner, so as to implement the method for processing a voice call in Embodiment 3 of the present invention. As shown in FIG. 15, the apparatus for processing a voice call includes a network interface 1510, a processor 1520, and a memory 1530. A system bus 1540 is configured to connect the network interface 1510, the processor 1520, and the memory 1530.

The network interface 1510 is configured to communicate with a user terminal, a self-service process entity, a service control entity, and an agent management entity.

The memory 1530 may be a permanent memory such as a hard disk drive or a flash memory. The memory 1530 is configured to store an application program, where the application program includes an instruction which can be used to cause the processor 1520 to execute the following procedure:
receiving a call request that is sent by a service control entity in a call center when the service control entity determines that a user corresponding to a user terminal needs assistance at a certain node in a self-service process for inviting the agent terminal to join in a voice site established by the service control entity, where the self-service process is specifically provided by a self-service process entity in the call center; and
when the service control entity adds the user terminal, the self-service process entity, and the apparatus to the voice site, providing an assistance service for the user according to a demand of the user at the certain node.

Further, the application program stored in the memory 1530 further includes an instruction which can be used to cause the processor 1520 to execute the following procedure:
when it is determined that an exception occurs on the user corresponding to the user terminal at the certain node, sending a query message to the user terminal by using the service control entity, where the query message is used to inquire of the user whether to accept the assistance service provided by the apparatus; and
the instruction, which can be used to cause the processor to execute the procedure of receiving a call request that is sent by a service control entity in a call center when the service control entity determines that a user corresponding to a user terminal needs assistance at a certain node in a self-service process for inviting an agent terminal to join in a voice site established by the service control entity, of the application is specifically an instruction for executing the following procedure:
   receiving the call request that is sent by the service control entity when the service control entity receives a permit message sent by the user terminal and determines,
   according to the permit message, that the user corresponding to the user terminal needs assistance at the certain node in the self-service process.

Further, the application program stored in the memory 1530 further includes an instruction which can be used to cause the processor 1520 to execute the following procedure:
receiving node identity information, sent by an agent management entity in the call center, of the certain node where the user corresponding to the user terminal is in the self-service process, so that the apparatus determines, according to the node identity information, that the user corresponding to the user terminal is at the certain node in the self-service process.

Further, the application program stored in the memory 1530 further includes an instruction which can be used to cause the processor 1520 to execute the following procedure:
sending a jump request message to the self-service process entity by using the service control entity, where the jump request message includes target node identity information and is used to instruct the self-service process entity to cause a node where the user is to jump to a target node identified by the target node identity information.

Further, the application program stored in the memory 1530 further includes an instruction which can be used to cause the processor 1520 to execute the following procedure:
receiving a jump success response message that is forwarded by the service control entity and sent by the self-service process entity; and
marking, according to the jump result message and on a self-service flowchart displayed on the agent terminal, the target node as a node where the user is currently at, where the self-service flowchart shows all nodes in the self-service process and a relationship among all the nodes in the self-service process.

Further, the application program stored in the memory 1530 further includes an instruction which can be used to cause the processor 1520 to execute the following procedure:
when the target node is a serving device, stopping providing the corresponding assistance service for the user.

Therefore, by using the apparatus for processing a voice call that is provided in the embodiment of the present invention, when a service control entity determines that a user corresponding to a user terminal needs assistance at a certain node in a self-service process, the apparatus joins in, according to a call made by the service control entity, a voice site established by the service control entity, and provides an assistance service for the user according to a demand of the user at the certain node. With the technical features that when the service control entity determines that the user corresponding to the user terminal needs assistance at the certain node in the self-service process, the apparatus joins in the voice site and provides the assistance service for the user according to the demand of the user at the certain node, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience.

### Embodiment 10

Correspondingly, Embodiment 10 of the present invention further provides a system for processing a voice call. As shown in FIG. 16, the system includes: the apparatuses for processing a voice call that are provided in Embodiment 4 of the present invention and Embodiment 6 of the present invention; or
the system includes: the apparatuses for processing a voice call that are provided in

Embodiment 7 of the present invention and Embodiment 9 of the present invention. Further the system further includes the apparatus for processing a voice call that is provided in Embodiment 5 of the present invention or Embodiment 8 of the present invention.
Further, the system further includes a self-service process entity.
Further, the system further includes a user terminal and a corresponding communications network.
Therefore, by using the system for processing a voice call that is provided in the embodiment of the present invention, when a service control entity in a call center determines that a user corresponding to a user terminal needs assistance at a certain node in a self-service process, the service control entity establishes a voice site, and adds the user terminal, a self-service process entity, and an agent terminal in the call center to the voice site, so that the agent terminal provides an assistance service for the user according to a demand of the user at the certain node. With the technical features that the service control entity establishes the voice site and adds the user terminal, the self-service process entity, and the agent terminal to the voice site, the present invention solves the problem in the prior art that the service efficiency of the call center is low because a manual agent service cannot be provided online for the user at a certain node in the self-service process, and enables the agent terminal to provide the assistance service for the user according to a demand of the user at the certain node in the self-service process, which improves the service efficiency and user experience. A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.
In combination with the embodiments disclosed in this specification, method or algorithm steps may be implemented by hardware, a software module executed by a processor, or a combination thereof. The software module may reside in a random access memory (RAM), memory, a read-only memory (ROM), an electrically programmable ROM, an electrically erasable programmable ROM, a register, a hard disk, a removable disk, a CD-ROM, or any other form of storage medium known in the art.
The foregoing specific embodiments clarify the objectives, technical solutions, and benefits of the present invention in detail. It should be understood that the foregoing descriptions are merely specific embodiments of the present invention, but are not intended to limit the protection scope of present invention. Any modification, equivalent replacement, or improvement made without departing from the spirit and principle of the present invention should fall within the protection scope of the present invention.

## Claims

1. A method for processing a voice call, wherein the method comprises:
establishing, by a service control entity, a voice site when the service control entity in a call center determines that a user corresponding to a user terminal needs assistance at a certain node in a self-service process, wherein the self-service process is provided by a self-service process entity in the call center; and
adding, by the service control entity, the user terminal, the self-service process entity, and an agent terminal in the call center to the voice site, so that the agent terminal provides an assistance service for the user according to a demand of the user at the certain node.

2. The method for processing a voice call according to claim 1, wherein the determining, by a service control entity in a call center, that a user corresponding to a user terminal needs assistance at a certain node in a self-service process specifically comprises:
receiving, by the service control entity, an assistance message that is sent by the self-service process entity when the self-service process entity receives a help-seeking instruction, wherein the help-seeking instruction is sent by the user terminal at the certain node in the self-service process; and
determining, by the service control entity according to the assistance message, that the user corresponding to the user terminal needs an assistance service at the certain node in the self-service process.

3. The method for processing a voice call according to claim 2, wherein the assistance message comprises node identity information of the certain node;
before the establishing, by the service control entity, a voice site, the method further comprises:
sending, by the service control entity, an allocate request message to an agent management entity in the call center, so as to request the agent management entity to allocate an agent terminal, wherein the allocate request message comprises the node identity information and is used by the agent management entity to send the node identity information to the allocated agent terminal; and
receiving, by the service control entity, an allocate response message sent by the agent management entity, wherein the allocate response message comprises identity information of the allocated agent terminal ; and
the adding, by the service control entity, the user terminal, the self-service process entity, and an agent terminal in the call center to the voice site, so that the agent terminal provides an assistance service for the user according to a demand of the user at the certain node specifically comprises:
adding, by the service control entity, the user terminal, the self-service process entity, and the agent terminal identified by the identity information to the voice site, so that the agent terminal determines, according to the node identity information, that the user corresponding to the user terminal is at the certain node in the self-service process, and then the agent terminal provides the assistance service for the user according to the demand of the user at the certain node.

4. The method for processing a voice call according to claim 1, wherein the determining, by a service control entity in a call center, that a user corresponding to a user terminal needs assistance at a certain node in a self-service process specifically comprises:
receiving, by the service control entity, a query message sent by the agent terminal that monitors a state of the self-service process, wherein the query message is sent by the agent terminal when the agent terminal determines that an exception occurs in an operation performed by the user corresponding to the user terminal at the certain node;
sending, by the service control entity, the query message to the user terminal by using the self-service process entity, wherein the query message is used to inquire of the user whether to accept the assistance service provided by the agent terminal;
when the user accepts the assistance service provided by the agent terminal, receiving, by the service control entity, a permit message that is sent by the user terminal by using the self-service process entity; and
determining, by the service control entity according to the permit message, that the user corresponding to the user terminal needs the assistance service at the certain node in the self-service process.

5. The method for processing a voice call according to any one of claims 1 to 4, wherein the method further comprises:
receiving, by the service control entity, a jump request message sent by the agent terminal, and forwarding the jump request message to the self-service process entity, wherein the jump request message comprises target node identity information and is used to instruct the self-service process entity to cause a node where the user is to jump to a target node identified by the target node identity information.

6. The method for processing a voice call according to claim 5, wherein the method further comprises:
receiving, by the service control entity, a jump success response message sent by the self-service process entity, and forwarding the jump success response message to the agent terminal, so that the agent terminal marks, according to the jump success response message and on a self-service flowchart displayed on the agent terminal, the target node as a node where the user is currently at, wherein the self-service flowchart shows all nodes in the self-service process and a relationship among all the nodes in the self-service process.

7. The method for processing a voice call according to claim 6, wherein after the receiving, by the service control entity, a jump success response message sent by the self-service process entity, the method further comprises:
sending, by the service control entity, a notification message to the agent management entity, wherein the notification message comprises the target node identity information and is used for the agent management entity to determine, according to the target node identity information, a node where the user assisted by the agent terminal is currently at.

8. A method for processing a voice call, wherein the method comprises:
receiving, by an agent management entity in a call center, an allocate request message that is sent by a service control entity in the call center when the service control entity determines that a user corresponding to a user terminal needs assistance at a certain node in a self-service process, wherein the allocate request message comprises node identity information of the certain node;
allocating, by the agent management entity according to the allocate request message, an agent terminal capable of providing an assistance service for the user from an agent queue managed by the agent management entity;
sending, by the agent management entity, the node identity information to the agent terminal allocated; and
sending, by the agent management entity, an allocate response message to the service control entity, wherein the allocate response message comprises identity information of the agent terminal allocated and is used for the service control entity to add the user terminal, the self-service process entity, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

9. The method for processing a voice call according to claim 8, wherein the allocating, by the agent management entity according to the allocate request message, an agent terminal capable of providing an assistance service for the user from an agent queue managed by the agent management entity specifically comprises:
acquiring, according to the allocate request message, user information corresponding to the user terminal, determining a priority of the user by using the user information, and allocating, by the agent management entity according to the priority of the user, the agent terminal capable of providing the assistance service for the user from the agent queue managed by the agent management entity; or
the allocate request message further comprises node type information, allocating, by the agent management entity according to the node type information, an agent terminal capable of providing the assistance service for the user from the agent queue managed by the agent management entity.

10. The method for processing a voice call according to claim 8, wherein after the allocating, by the agent management entity according to the allocate request message, an agent terminal capable of providing an assistance service for the user from an agent queue managed by the agent management entity, the method further comprises:
setting, by the agent management entity, a state of the agent terminal allocated , to a transparent agent state, and canceling the transparent agent state when the agent terminal stops providing the assistance service for the user, so as to collect statistics on a situation in which the agent terminal serves as a transparent agent to provide an assistance service for a user.

11. The method for processing a voice call according to claim 8, wherein after the sending, by the agent management entity, an allocate response message to the service control entity, the method further comprises:
when the agent terminal jumps from the certain node to another node in the self-service process entity, receiving, by the agent management entity, a notification message sent by the service control entity, wherein the notification message comprises an identity of the another node; and determining, according to the identity of the another node, that the user assisted by the agent terminal is currently at the another node.

12. A method for processing a voice call, wherein the method comprises:
receiving, by an agent terminal in a call center, a call request that is sent by a service control entity in the call center when the service control entity determines that a user corresponding to a user terminal needs assistance at a certain node in a self-service process for inviting the agent terminal to join in a voice site established by the service control entity, wherein the self-service process is specifically provided by a self-service process entity in the call center; and
providing, by the agent terminal, an assistance service for the user according to a demand of the user at the certain node when the service control entity adds the user terminal, the self-service process entity, and the agent terminal to the voice site.

13. The method for processing a voice call according to claim 12, wherein before the receiving, by an agent terminal in a call center, a call request that is sent by a service control entity in the call center when the service control entity determines that a user corresponding to a user terminal needs an assistance service at a certain node in a self-service process, the method further comprises:
sending, by the agent terminal, a query message to the user terminal by using the service control entity when the agent terminal determines that an exception occurs on the user corresponding to the user terminal at the certain node, wherein the query message is used to inquire of the user whether to accept the assistance service provided by the agent terminal; and
the receiving, by an agent terminal, a call request that is sent by a service control entity in the call center when the service control entity determines that a user corresponding to a user terminal needs an assistance service at a certain node in a self-service process for inviting the agent terminal to join in a voice site established by the service control entity specifically comprises:
receiving, by the agent terminal, the call request that is sent by the service control entity when the service control entity receives a permit message sent by the user terminal and determines, according to the permit message, that the user corresponding to the user terminal needs an assistance service at the certain node in the self-service process.

14. The method for processing a voice call according to claim 12, wherein before the receiving, by an agent terminal in a call center, the call request that is sent by a service control entity in the call center when the service control entity determines that a user corresponding to a user terminal needs an assistance service at a certain node in a self-service process, the method further comprises:
receiving, by the agent terminal, node identity information, sent by an agent management entity in the call center, of the certain node where the user corresponding to the user terminal is in the self-service process, so that the agent terminal determines, according to the node identity information, that the user corresponding to the user terminal is at the certain node in the self-service process.

15. The method for processing a voice call according to any one of claims 12 to 14, wherein the method further comprises:
sending, by the agent terminal, a jump request message to the self-service process entity by using the service control entity, wherein the jump request message comprises target node identity information and is used to instruct the self-service process entity to cause a node where the user is to jump to a target node identified by the target node identity information.

16. The method for processing a voice call according to claim 15, wherein the method further comprises:
receiving, by the agent terminal, a jump success response message that is forwarded by the service control entity and sent by the self-service process entity; and
marking, by the agent terminal, according to the jump success response message and on a self-service flowchart displayed on the agent terminal, the target node as a node where the user is currently at, wherein the self-service flowchart shows all nodes in the self-service process and a relationship among all the nodes in the self-service process.

17. The method for processing a voice call according to any one of claims 12 to 16, wherein the method further comprises:
when the target node is a serving device, stopping, by the agent terminal, providing the corresponding assistance service for the user.

18. An apparatus for processing a voice call, wherein the apparatus comprises:
an establishing unit, configured to: when it is determined that a user corresponding to a user terminal needs assistance at a certain node in a self-service process, establish a voice site, wherein the self-service process is specifically provided by a self-service process entity in a call center; and
an adding unit, configured to add the user terminal, the self-service process entity, and an agent terminal in the call center to the voice site, so that the agent terminal provides an assistance service for the user according to a demand of the user at the certain node.

19. The apparatus for processing a voice call according to claim 18, wherein the apparatus further comprises:
a receiving unit, configured to receive an assistance message that is sent by the self-service process entity when the self-service process entity receives a help-seeking instruction, wherein the help-seeking instruction is sent by the user terminal at the certain node in the self-service process; and configured to transmit the assistance message to a determining unit; and
the determining unit, configured to receive the assistance message from the receiving unit, and determine, according to the assistance message, that the user corresponding to the user terminal needs an assistance service at the certain node in the self-service process.

20. The apparatus for processing a voice call according to claim 19, wherein the assistance message received by the receiving unit comprises node identity information of the certain node;
the apparatus further comprises a sending unit, configured to send an allocate request message to an agent management entity in the call center, so as to request the agent management entity to allocate an agent terminal, wherein the allocate request message comprises the node identity information and is used by the agent management entity to send the node identity information to the allocated agent terminal ;
the receiving unit is further configured to receive an allocate response message sent by the agent management entity, wherein the allocate response message comprises identity information of the allocated agent terminal ; and configured to transmit the identity information of the agent terminal to the adding unit; and
the adding unit is specifically configured to receive the identity information of the agent terminal from the receiving unit, and add the user terminal, the self-service process entity, and the agent terminal identified by the identity information to the voice site, so that the agent terminal determines, according to the node identity information, that the user corresponding to the user terminal is at the certain node in the self-service process, and then the agent terminal provides an assistance service for the user according to a demand of the user at the certain node.

21. The apparatus for processing a voice call according to claim 18, wherein the apparatus further comprises:
a receiving unit, configured to receive a query message sent by the agent terminal that monitors a state of the self-service process, wherein the query message is sent by the agent terminal when the agent terminal determines that an exception occurs in an operation performed by the user corresponding to the user terminal at the certain node; and configured to transmit the query message to the sending unit; and
the sending unit, configured to receive the query message from the receiving unit, and send the query message to the user terminal by using the self-service process entity, wherein the query message is used to inquire of the user whether to accept the assistance service provided by the agent terminal;
the receiving unit is further configured to: when the user accepts the assistance service provided by the agent terminal, receive a permit message that is sent by the user terminal by using the self-service process entity, and configured to transmit the permit message to the determining unit; and
the determining unit is further configured to receive the permit message from the receiving unit, and determine, according to the permit message, that the user corresponding to the user terminal needs an assistance service at the certain node in the self-service process.

22. The apparatus for processing a voice call according to claim 20 or 21, wherein the receiving unit is further configured to receive a jump request message sent by the agent terminal, and configured to transmit the jump request message to the sending unit; and
the sending unit is further configured to receive the jump request message from the receiving unit, and forward the jump request message to the self-service process entity, wherein the jump request message comprises target node identity information and is used to instruct the self-service process entity to cause a node where the user is to jump to a target node identified by the target node identity information.

23. The apparatus for processing a voice call according to claim 22, wherein the receiving unit is further configured to receive a jump success response message sent by the self-service process entity, and configured to transmit the jump success response message to the sending unit; and
the sending unit is further configured to receive the jump success response message from the receiving unit, and forward the jump success response message to the agent terminal, so that the agent terminal marks, according to the jump success response message and on a self-service flowchart displayed on the agent terminal, the target node as a node where the user is currently at, wherein the self-service flowchart shows all nodes in the self-service process and a relationship among all the nodes in the self-service process.

24. The apparatus for processing a voice call according to claim 23, wherein the sending unit is further configured to send a notification message to the agent management entity, wherein the notification message comprises the target node identity information and is used for the agent management entity to determine, according to the target node identity information, a node where the user assisted by the agent terminal is currently at.

25. An apparatus for processing a voice call, wherein the apparatus comprises:
a receiving unit, configured to receive an allocate request message that is sent by a service control entity in a call center when the service control entity determines that a user corresponding to a user terminal needs assistance at a certain node in a self-service process, wherein the allocate request message comprises node identity information of the certain node; and configured to transmit the allocate request message to an allocating unit; and transmit the node identity information to a sending unit;
the allocating unit, configured to receive the allocate request message from the receiving unit, and allocate, according to the allocate request message, an agent terminal capable of providing an assistance service for the user from an agent queue managed by the apparatus; and
the sending unit, configured to receive the node identity information from the receiving unit, and send the node identity information to the agent terminal allocated ; wherein
the sending unit is further configured to send an allocate response message to the service control entity, wherein the allocate response message comprises identity information of the agent terminal allocated and is used for the service control entity to add the user terminal, the self-service process entity, and the agent terminal identified by the identity information to a voice site, so that the agent terminal determines, according to the node identity information, that the user corresponding to the user terminal is at the certain node in the self-service process, and then the agent terminal provides the assistance service for the user according to a demand of the user at the certain node.

26. The apparatus for processing a voice call according to claim 25, wherein the allocating unit is specifically configured to acquire, according to the allocate request message, user information corresponding to the user terminal, determine a priority of the user by using the user information, and allocate, according to the priority of the user, the agent terminal capable of providing the assistance service for the user from the agent queue managed by the apparatus; or
in a case in which the allocate request message received by the receiving unit further comprises node type information,
the allocating unit is specifically configured to allocate, according to the node type information, the agent terminal capable of providing the assistance service for the user from the agent queue managed by the apparatus.

27. The apparatus for processing a voice call according to claim 25, wherein the apparatus further comprises:
a setting unit, configured to set a state of the agent terminal allocated to a transparent agent state, and cancel the transparent agent state when the agent terminal stops providing the assistance service for the user, so as to collect statistics on a situation in which the agent terminal serves as a transparent agent to provide an assistance service for a user.

28. The apparatus for processing a voice call according to claim 25, wherein the receiving unit is further configured to: when the agent terminal jumps from the certain node to another node in the self-service process entity, receive a notification message sent by the service control entity, wherein the notification message comprises an identity of the another node; and determine, according to the identity of the another node, that the user assisted by the agent terminal is currently at the another node.

29. An apparatus for processing a voice call, wherein the apparatus comprises:
a receiving unit, configured to receive a call request that is sent by a service control entity in a call center when the service control entity determines that a user corresponding to a user terminal needs assistance at a certain node in a self-service process for inviting the apparatus to join in a voice site established by the service control entity, wherein the self-service process is specifically provided by a self-service process entity in the call center; and
a serving unit, configured to: when the service control entity adds the user terminal, the self-service process entity, and the apparatus to the voice site, provide an assistance service for the user according to a demand of the user at the certain node.

30. The apparatus for processing a voice call according to claim 29, wherein the apparatus further comprises:
a sending unit, configured to: when it is determined that an exception occurs on the user corresponding to the user terminal at the certain node, send a query message to the user terminal by using the service control entity, wherein the query message is used to inquire of the user whether to accept the assistance service provided by the apparatus; and
the receiving unit is specifically configured to receive the call request that is sent by the service control entity when the service control entity receives a permit message sent by the user terminal and determines, according to the permit message, that the user corresponding to the user terminal needs an assistance service at the certain node in the self-service process.

31. The apparatus for processing a voice call according to claim 29, wherein the receiving unit is further configured to receive node identity information, sent by an agent management entity in the call center, of the certain node where the user corresponding to the user terminal is in the self-service process, and configured to determine, according to the node identity information, that the user corresponding to the user terminal is at the certain node in the self-service process.

32. The apparatus for processing a voice call according to claim 30 or 31, wherein the apparatus further comprises:
a jumping unit, configured to instruct, by using the service control entity, the self-service process entity to cause a node where the user is to jump to a target node identified by target node identity information.

33. The method for processing a voice call according to claim 32, wherein the receiving unit is further configured to receive a jump success response message that is forwarded by the service control entity and sent by the self-service process entity, and configured to transmit the jump success response message to the jumping unit; and
the jumping unit is further configured to receive the jump success response message from the receiving unit, mark, according to the jump success response message and on a self-service flowchart displayed on the apparatus, the target node as a node where the user is currently at, wherein the self-service flowchart shows all nodes in the self-service process and a relationship among all the nodes in the self-service process.

34. The apparatus for processing a voice call according to any one of claims 29 to 33, wherein the apparatus further comprises:
a stopping unit, configured to: when the target node is a serving device, stop providing the corresponding assistance service for the user.

35. A system for processing a voice call, wherein the system comprises: the apparatus for processing a voice call according to any one of claims 18 to 24, and the apparatus for processing a voice call according to any one of claims 29 to 34.

36. The system for processing a voice call according to claim 35, wherein the system further comprisesis used by: the apparatus for processing a voice call according to any one of claims 25 to 28.

37. The system for processing a voice call according to claim 35 or 36, wherein the system further comprises a self-service process entity.
